(19) Europäisches Patentamt
European Patent Office
Office européen des brevets

(11) Publication number: 0 362 137 A2

# (12) EUROPEAN PATENT APPLICATION

(21) Application number: 89810712.3

(51) Int. Cl.[5]: C08J 7/04 , G02B 1/04 , B29D 11/00 , C08J 5/12

(22) Date of filing: 20.09.89

(30) Priority: 28.09.88 US 250199

(43) Date of publication of application: 04.04.90 Bulletin 90/14

(84) Designated Contracting States: AT BE CH DE ES FR GB GR IT LI LU NL SE

(71) Applicant: CIBA-GEIGY AG
Klybeckstrasse 141
CH-4002 Basel(CH)

(72) Inventor: Mueller, Karl F.
119 West 77th Street
New York New York 10024(US)
Inventor: Harisiades, Paul
76-09 85th Road
Woodhaven New York 11421(US)
Inventor: Heiber, Sonia J.
391 North Virginia Street
Salt Lake City Utah 84103(US)

## (54) Molded polymers with hydrophilic surfaces, and process for making them.

(57) Polymer composites are described which consist of a 0.1-500 micron thick film of a preshaped, surface-forming hydrophilic first polymer A covalently grafted onto an underlaying bulk and structural second polymer B and which are prepared by polymerizing said second polymer B on a substrate which is coated with the hydrophilic first polymer A, said first polymer being able to co-react with the monomers used to prepare the second polymer B.

Because of their continuous nature and covalent bonding, the hydrophilic surface films of polymer A adhere tightly to the underlaying polymer B and also conform exactly to the configuration of the substrate or mold; polymers with such permanently modified surfaces are useful as biocompatible materials, for instance as contact lenses or as low-friction or non-blocking elastomers, as well as non-fogging, washable and printable polymers.

The instant process can also be adopted to prepare the reverse type of polymer composite comprising a hydrophilic polymer with a thin hydrophobic or lipophobic surface. Such composites can be used as membranes, release-rate controlling devices and solvent and soil-resistant polymers.

EP 0 362 137 A2

# MOLDED POLYMERS WITH HYDROPHILIC SURFACES, AND PROCESS FOR MAKING THEM

In many instances of polymer technology and polymer applications, it is desirable to impart to a polymer article surface properties which are different from the properties of the bulk. Good examples include the treatment of textiles to make them either more hydrophilic or more hydrophobic by coating with thin films of either hydrophilic or hydrophobic polymers, including fluorinated oleophobic polymers and curing and crosslinking them on the fiber to achieve some permanence. While this will produce a homogeneous continuous film of definite thickness, permanence is usually poor because little or no covalent bonding exists between the polymer and the fiber, and by abrasion during repeated washing, dry cleaning and drying cycles the polymer film is easily removed.

Another method for modifying polymer-surfaces is grafting. Grafting is called the covalent attachment of monomers or polymers on existing polymer chains, for instance solid polymer surfaces. This can be accomplished in numerous ways. For example, treatment with ionizing radiation (x-rays, electron beams) in the presence of oxygen of a polymer surface, followed by heat-treatment of the peroxidized polymer in presence of an appropriate vinyl monomer will give graft-modified surfaces. Another method to introduce peroxy groups onto a polymer surface is by ozone treatment. Treatment with a plasma (ionized gas) alone can oxidize and otherwise chemically modify a polymer surface, dependent on the nature of the plasma, and this method can be used to hydrophilize polyolefins in order for them to absorb printing ink.

Grafting onto solid polymers can also be carried out by first immersing the polymer in a monomer with an initiator for a specified time, followed by exposing the surface-swollen polymer to polymerizing conditions. Many variations of the mentioned processes have been described, all having as the objective the grafting of a vinyl polymer on a preformed polymer substrate.

There are several major drawbacks to all these processes and products; for instance polymerization can occur not only on the surface, but also in the liquid polymerization medium. Also, because the polymerization depends on active centers which decompose at different times, inhomogeneous surfaces result because of preferential absorption of monomer into already modified surface regions. In cases where exact depth-control and uniformity of the grafted region is important, such as for example in the surface modification of contact lenses, such uncontrollable grafting reactions are not acceptable. On the other hand, if, to reduce inhomogeneities, grafting is carried out for a short time only, the grafted surface regions are too thin and in many applications the surface effect soon wears off.

Although free-radical grafting of vinyl-monomers is by far the most commonly used method for grafting onto polymer surfaces, if these polymers contain suitable reactive groups, other reactions can be utilized; polyvinyl alcohol or cellulose can for instance be grafted with isocyanato compounds, polydienes with mercaptans, and oxirane groups containing polymers with amines and mercaptans. In most practical cases however the polymer one wishes to modify is an inert, non-reactive polymer.

Yet another method of surface-modification, this one by formation of an interpenetrating polymer network (IPN) in which a second polymer interpenetrates a first one without covalent bonding between both, has been described in the literature, for example in U.S. 4,423,099. These methods too have the disadvantage of having swelling steps involved which in applications like contact lenses lead to unacceptable surface distortions.

In the contact lens field surface properties are important because they affect deposit-formation and wettability and thereby the comfort of the lens for the wearer. Lack of wettability is an especially serious problem in contact lenses made from silicone rubber, which because of its very high oxygen permeability would otherwise be an ideal contact lens material. Many of the mentioned processes of surface-grafting and irradiation have been used to overcome this wettability problem and either suffer from a lack of permanence or from poor optical quality, as is indicated by the fact that a generally accepted silicone rubber soft contact lens has not yet been produced. Relevant patents in this area include:

U.S. 3,925,178 describes surface treatment by water-vapor subjected to an electrical discharge.

U.S. 4,099,859 describes grafting a hydrophilic polymer onto a silicone-rubber contact lens by coating the lens with a hydrophilic monomer followed by exposure to UV.

U.S. 4,229,273 describes grafting of a acrylic polymer onto a silicone rubber lens pre-irradiated in the presence of oxygen.

U.S. 4,168,112 describes the formation of a poly-electrolyte complex on the surface of a contact lens in order to render it more hydrophilic and comfortable to wear.

U.S. 4,217,038 describes the formation of a glass-coating on a silicone contact lens to improve wettability.

U.S. 4,409,258 describes a hydrophilizing treatment of contact lenses by bombardment with nitrogen

and oxygen containing gas-ions.

U.S. 4,388,164 describes coating the surface of a silicone rubber with a thin metal film by vacuum decomposition in the stretched state.

U.S. 4,332,922 describes hydrophilization of silicone contact lenses by a gas-discharge.

U.S. 4,143,949 describes a hydrophilic coating onto a hydrophobic contact lens by radiation induced polymerization.

U.S. 4,311,573 describes hydrophilization of a hydrophobic polymer by ozone treatment, followed by a grafting of vinyl monomers through decomposition of the formed peroxy groups.

U.S. 4,652,672 describes surface hydrophilization of polysiloxane contact lens materials by inclusion of N-alkenoyl trialkylsilylaminate, 1-12 parts by weight, into the monomer mixture and hydrolysis after polymerization.

Although many of these reactants are successful in increasing the wettability of a hydrophobic polymer, the effect is generally limited to a thin surface region and therefore is not permanent.

It would be desirable to have an integral, hydrophilic surface layer completely covering the underlaying hydrophobic polymer in such a way, that no hydrophobic groups can penetrate to the surface. It is, however, difficult to produce such hydrophilic/hydrophobic laminates with good adhesion, especially if on immersion in water one of the polymers swells a much higher degree than the other. This can be overcome by formation of interpenetrating polymer networks (IPN's), in which the surface forming polymer is completely or in part formed after its monomers have been allowed to diffuse into the substrate, as described by G.C. Berry, M. Dvor; ACS Preprints - Organic Coatings and Plastic Chemistry, Vol. 38, 465 (1978) and in U.S. 4,423,099; these processes are, however, not suited for the production of contact lenses because of unacceptable surface distortions.

It has now been discovered, that if a mold is coated with a hydrophilic polymer bearing groups which are capable of copolymerizing with the reactive groups of the polymerizing mixture to be molded, said hydrophilic polymer is transferred by grafting during the polymerization onto the surface of the molded part, forming an integral and continuous skin. Because the reactive polymer coating is a hydrophilic polymer that skin on the surface of the molded part will be completely hydrophilic and in no way resemble the underlying polymer. Because of the covalent bonding between both polymers and because of the defined thickness of the grafted polymer film, the surface is very abrasion resistant and durable, while at the same time precisely replicating the mold surface.

U.S. 4,462,665 describes formation of a laminate contact lens by compressing in a mold a surface forming hydrophilic polymer under heat together with a preformed contact lens. Excellent bonding between both polymers is reported, but the range of composition is limited to mixtures of polyvinyl pyrrolidone bonded to polyvinyl butyral.

In U.S. 3,968,305 a product is described which consists of a highly crosslinked, hydrophobic, mar resistant polymer surface, integral bonded onto a molded shaped polymer article by a process which consists of a) coating onto and b) polymerizing on the mold surface a compound containing at least 3 (meth)acryloxy groups, followed by c) polymerizing a vinyl monomer mixture in the mold, thereby transferring the scratch resistant mold coating onto the shaped article, in this case an eyeglass lens.

U.S. 4,544,572 elaborates on the aforementioned process for making abrasion resistant coatings on eye-glasses by first coating a mold with a mono- or polyvinyl compound, but then only partially polymerizing it by exposure to UV, thus leaving a polymer-film swollen or dissolved in its own monomer, on the mold surface. No hydrophilic monomers or polymers are described as mold coatings.

In contrast, the mold coatings of the instant invention consist of hydrophilic polymers, which are preformed and monomer-free and contain reactive sites, capable of reacting with a polymerizing monomer mixture.

In contrast to conventionally grafted surfaces, where the grafted surface polymer chains are essentially dangling chains, attached to the substrate at one end, the grafted polymer chains of this invention are multiply attached to the substrate at sites distributed along their whole length.

Furthermore, and also in contrast to conventionally grafted surfaces where the grafted surface layer is formed in an open medium - air, nitrogen, solvents - and therefore does not exactly conform to a desired surface shape or surface quality, the grafted hydrophilic polymer of this invention is preshaped, conforming to a given substrate, and therefore the final product composite precisely replicates that substrates configuration and surface quality.

In addition, in the present invention a wide variety of reactive, film-forming polymers can be utilized and permanently bonded to a great variety of molded polymers, which may be either free-radical polymerized chain-growth polymers, or polycondensates and other step-growth polymers in general. No such step-growth polymer grafting reactions have been described in the prior art.

The instant invention is to a product which comprises

(a) a preformed, optically true, thin, conforming, continuous, integral, wettable hydrophilic polymeric surface of hydrophilic polymer (A) intimately bonded through a multiplicity of covalent bonds distributed essentially uniformly across the entire polymeric surface/polymer substrate interface on

(b) a polymer substrate which is reaction cast and is an essentially hydrophobic polymer (B).

A preferred embodiment of this product is a contact lens.

The thickness of the polymeric surface of hydrophilic polymer (A) is preferably 0.1 to 500 microns.

By "essentially hydrophobic" is meant that polymer (B) is more hydrophobic than polymer (A), and not necessarily hydrophobic in the absolute sense of a water repellent polymer.

The hydrophilic polymer (A) of the instant invention is either a polymer (A-1) which contains a plurality of "step-growth reactive" functional groups and is selected from the group consisting of water soluble vinyl polymers, carbohydrate polymers, polyethylene oxide or polyethylene oxide-containing polymers, and polyamines, or is an essentially water soluble polymer (A-2) bearing a plurality of "chain-growth (free radical) reactive" functional groups.

By "step-growth reactive" group is meant a reactive group which is part of a typical step-growth polycondensation or addition reaction, such as: hydroxyl, primary and secondary amino, isocyanate, oxirane, carboxyl, silylhydride, thiol, anhydride, or a quaternizable halide or t-amino group.

By "chain-growth (free-radical) reactive" functional group is meant ethylenic or allylic unsaturation, but also labile groups or abstractable hydrogen atoms, like tert. hydrogens, which participate in chain-transfer reactions.

A preferred embodiment of the hydrophilic polymer (A-1) is e.g. poly(vinyl alcohol), ethoxylated poly-(vinyl alcohol), hydroxyalkyl cellulose or copolymers of 2-hydroxyethyl acrylate, 2-hydroxyethyl methacrylate or an aminoalkyl methacrylate with N,N-dimethylacrylamide or N-vinylpyrrolidone.

A preferred embodiment of the hydrophilic polymer (A-2) is poly-N-vinylpyrrolidone, poly-N,N-dimethylacrylamide, a copolymer of N,N-dimethylacrylamide with acrylic acid, methacrylic acid, sodium styrene sulfonate, 2-methacrylamido-2-methylpropane sulfonic acid or 2-hydroxyethyl methacrylate; a copolymer of 2-hydroxyethyl methacrylate or N-tert.-butylaminoethyl methacrylate in which at least 1 mol % of the mer units are reacted with an isocyanato or oxirane functional vinyl compound; poly(vinylalcohol), ethoxylated poly(vinyl alcohol) or hydroxyethyl cellulose in which 0 to 5 mol % of the OH groups are reacted with an isocyanato or oxirane functional vinyl compound; poly(ethylene oxide) of 1000-10000 MW, bis-(aminopropyl) poly(ethylene oxide) or a block copolyurethane of poly(ethylene oxide) and polydimethylsiloxane dialkanol, with or without terminal methacrylate groups.

The hydrophobic polymers (B) are either step-growth polymers (B-1): polyester, polyamides, polyimides, polyethers, polyurethanes, polyureas, epoxy resins, polythioethers, silicone rubber, polyionenes, or are chain-growth vinyl polymers (B-2).

A preferred embodiment of the hydrophobic polymer (B-1) is a polyurethane or polyurea, most preferably a polyurethane. Still another preferred embodiment of hydrophobic polymer (B-1) is a polyurethane containing polydimethylsiloxane chains of 500-10000 MW, or a fluorine containing polyurethane. Still another preferred embodiment of hydrophobic polymer (B-1) is a silicone rubber.

The hydrophobic polymer (B-2) is a linear or crosslinked vinyl polymer, such as where the vinyl polymer has recurring structural units of the formula I:

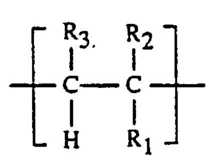

I

wherein $R_1$ is hydrogen or methyl, $R_2$ is an ester,amide, carboxy, ether, lactam or aromatic group, and $R_3$ is hydrogen or has the same meaning as $R_2$, thus describing homopolymers and copolymers of a monomer or monomers selected from the group consisting of the acrylates, methacrylates, acrylamides, methacrylamides, fumarates, maleates, itaconates, vinyl ethers, vinyl esters, vinyl-lactams and styrenes.

Preferred polymers (B-2) contain 30-100 mol % of mer-units of a linear or branched alkyl acrylate or methacrylate with 1 to 18 carbon atoms in the alkyl group; a cycloalkyl acrylate or methacrylate with 6 to 12 carbon atoms in the cycloalkyl group; phenyl- and benzyl acrylate or methacrylate; styrene; a fluorine containing acrylate, methacrylate or styrenic monomer with 3 to 21 fluorine atoms; a Si atoms containing acrylate, methacrylate or styrenic monomer with 2 to 10 Si atoms.

Also preferred are the polymerization products of macromeric poly-vinyl compounds of 500-10000 MW, consisting, for example, of poly ester and polyalkyleneether di-methacrylate, and of polysiloxane-di-, tri- and polymethacrylates.

Also preferred are the products wherein the hydrophobic polymer (B-2) is the polymerization product of 20-100 % (by weight) of a heat- or radiation curable poly-vinyl substituted polyester, polyurethane, polyurea or polyether of 500-10,000 MW with 0-80 % (by weight) vinyl monomers.

Also preferred are the products wherein the hydrophobic polymer (B-2) is the polymerization product of 50-100 % (by weight) of a divinyl substituted polyethylene-, polypropylene- or poly-tetramethylene oxide of 500-10,000 MW, and 0-50 % (by weight) of vinyl momoners.

Also preferred are the products wherein the hydrophobic polymer (B-2) is the polymerization product of a di-, tri- or tetravinyl substituted poly-dimethylsiloxane or polydimethylsiloxane-polyurethane of 500-10,000 MW.

Especially preferred are the polymerization products of mixtures of macromeric di-, tri- or tetra-vinyl substituted polysiloxanes with vinyl monomers in ratios of 80-20 % macromeric polysiloxane to 20-80 % monomer.

Also useful are the polymerization products of divinyl derivatives of fluorinated polyether-diols and of perfluoroalkyl substituted diols.

The invention also comprises a product, in which a) a preformed, thin, integral hydrophobic and/or lipophobic polymeric surface of at least 0.1 microns thickness is intimately bonded through a multiplicity of covalent bonds distributed essentially uniformly across the polymeric surface/polymer substrate interface onto b) a polymer substrate which is reaction cast and more hydrophilic and/or lipophilic than the surface forming polymer.

## Composition of Polymers

The products of the present invention consists of an underlying second polymer B covalently bonded to an overlaying, more hydrophilic first polymer A of 0.1 to 500 micron thickness.

The chemical nature of the hydrophilic surface-forming first polymer A depends on the nature of the secondly formed polymer B. In the most general sense one can distinguish between two pairs of A-B-polymer composites: one, in which the secondly formed structural polymer B is a step-growth or polycondensation polymer, such as a polyurethane (B = B-1) and the surface forming first polymer is coreactive by virtue or reactive groups, like hydroxyl groups (A = A-1); another, in which the secondly formed structural polymer B is a vinyl-polymer formed by free-radical initiated chain-growth polymerization (B = B-2) and the surface-forming first polymer is coreactive with this monomer system either by virtue of co-reactive vinyl groups or other grafting mechanisms such as chain transfer-reactions (A = A-2).

## Polymer A

The overlaying, transfer-grafted polymer A-1 is a polymer of 500-5x10$^6$ MW, containing functional groups co-reactive with the monomers used to prepare polymer B. If polymer B is a polycondensate or step-growth polymer, like a polyurethane or polyurea, polymer A is of type A-1 and contains groups like hydroxyl-, amino-(prim. or sec.), carboxy or isocyanate groups. Typical polymer A-1 include: polyvinyl alcohol (PVA) and polyvinyl alcohol copolymers; carbohydrate polymers, like cellulose, hydroxy-alkyl cellulose and other cellulose derivatives; ethoxylated PVA and polyethoxylated PVA, alcohols, polyols, amines and cellulosics; polyethylene-oxide diols and diamines; polyethylene amine; hydroxy functional hydrophilic polydiene derivatives; free isocyanate groups containing hydrophilic polyether diols capped with di- or tri-isocyanates.

Also useful as A-1 are reactive hydrogen, isocyanate or oxirane containing vinyl copolymers prepared from water-soluble monomers like acrylamide, N,N-dimethyl-acrylamide or N-vinylpyrrolidone and containing, for example, units of: hydroxyalkyl (meth)acrylates; acrylic or methacrylic acid; maleic anhydride; t-butyl-aminoethyl methacrylate; p-aminostyrene; isocyanatoethyl methacrylate, m-isopropenyl-α,α-dimethyl benzyl isocyanate or other vinyl isocyanates and glycidyl methacrylate. A large number of such functional vinyl-polymers can be synthesized by anyone skilled in the art of free-radical initiated polymerization.

Also useful as A-1 are polymers containing terminal OH-groups or carboxy groups, as can be, for instance, prepared by chain transfer polymerization of acrylates or methacrylates with thioethanol, thioglycerol, thioglycolic acid and related compounds; maleic-anhydride copolymers with styrene, vinyl

ethers or ethylene or free NCO-groups containing polymers of isocyanatoethyl methacrylate, which have been reacted with polyalkylene oxides, N-methyl glucamine, tris-hydroxymethylaminomethane (TRIS) or other suitable hydrophilic reactants.

Co-monomers useful to prepare the wettable polymer-surfaces of type A-1 include water soluble monomers like N,N-dimethyl acrylamide, N-vinylpyrrolidone, acrylamide, hydroxy ethyl and propyl methacrylates, and acrylates; vinyl acetamide; dimethylaminoethyl methacrylate, vinyl pyridine; vinyl-, styrene-and 2-methacrylamido-2-methylpropane sulfonic acid and their salts. Water insoluble comonomers can be used as well, as long as the hydrophilicity of the copolymer is not too much reduced. Such water insoluble comonomers include fluorinated or silicone containing vinyl monomers, for example hexafluorisopropyl methacrylate and tris(trimethylsiloxy)-silylpropyl methacrylate. Fluorinated hydrophilic surfaces are especially useful because of their oleophobic, soil-repellent nature.

If polymer B is an epoxy resin, polymer A-1 may be a copolymer of, for example, glycidyl methacrylate, (meth)acrylic acid or t-butylaminoethyl methacrylate, with other monomers, like N,N-dimethylacrylamide or N-vinylpyrrolidone, if a wettable surface is desired. If polymer B is an epoxy resin, polymer A-1 may also be polyanhydride, like poly(maleic anhydride-co-styrene, -co-vinylether or-co-ethylene).

If polymer B is a conventional silicone rubber obtained by reaction of polysiloxane-hydride with vinyl substituted polysiloxanes, polymer A-1 may also be either a vinyl substituted polymer, for instance an allyl or diene units containing polymer, or one of the poly-hydroxy polymers described above, especially polyvinyl alcohol (PVA), ethoxylated PVA and other PVA derivatives and copolymers.

In the most general case, since any addition-polymerization process can be used to make polymer B-1, polymer A-1 can likewise contain a large variety of matching reactive groups and the grafting reactions can include double-bond additions of thiol-, amino-, or silyl-hydride-groups, quaternization between bis-halides and bis-tert. amines, acetal formation between aldehydes and 1,2-diols, and formation of poly-imines by reaction of oxo-groups with primary amines.

Preferred hydrophilic polymers A-1 are: polyvinyl alcohol; ethoxylated polyvinyl alcohol; hydroxyalkyl cellulose; copolymers of 2-hydroxyethyl (meth)-acrylate or an aminoalkyl methacrylate, e.g. N-tert-butylaminoethyl methacrylate, with water soluble comonomers, like N,N-dimethylacrylamide or N-vinylpyrrolidone.

Most preferred polymers A-1 are polyvinyl alcohol, ethoxylated polyvinyl alcohol and hydroxyethyl cellulose.

If polymer B is a vinyl-polymer, the overlaying or transfer-grafted polymer A is of type A-2, containing polymerizable double bonds or other structural elements susceptive to grafting. Vinyl-substituted polymers can be obtained from hydroxy or amino groups containing polymers described in the previous section, like polyvinylalcohol, cellulose or hydroxyethyl cellulose; hydroxyalkyl (meth)acrylate ort-butylaminoethyl methacrylate polymers or copolymers; polyether diols, like polyethylene oxide diols, polypropylene oxide diols, poly(ethyleneoxide-co-propylene oxide) diols or polyester-diols, by reaction with vinyl-groups containing isocyanates, like 2-isocyanatoethyl methacrylate, m-isopropenyl-$\alpha,\alpha$-dimethylbenzyl isocyanate or a [diisocyanate + 2-hydroxyethyl methacrylate] 1:2 molar adduct; with a vinyl unsaturated oxirane, like glycidyl methacrylate; with maleic anhydride, (meth)acroyl chloride or similar vinyl-unsaturated reactants as they are used by those knowledgeable in the art of polymer synthesis; other methods, for example, consist of quaternization of dimethylaminoethyl methacrylate or 2- or4-vinyl-pyridine copolymers with vinyl-benzyl chloride or of reacting polymers obtained by chain-transfer oligomerization in the presence of thioethanol, thioglycerol, thiopropionic acid or dimethylamino-ethane thiol - and therefore containing terminal functional groups - with unsaturated isocyanates or oxiranes or vinyl benzyl chloride, leading to polymers with terminal reactive groups of the macromer type (telechelic polymers).

In the vinyl-substituted polymers the vinyl groups may be pendant to the chain but they may also be part of the backbone, as in unsaturated polyesters, or poly-dienes, like 1,4-polybutadienes and 1,2-polybutadienes, and as in polymaleates or -fumarates.

It is however not necessary, that the overlaying polymer A-2 contain polymerizable groups in order to be co-reactive with the polymerizing vinyl monomer mixture; if under the reaction conditions employed free radicals are formed on polymer A-2, for instance by decomposition of peroxidized polymer or hydrogen abstraction, then these radicals can initiate polymerization leading to graft-copolymer by a chain transfer reaction. Useful to carry out this kind of grafting reaction are cellulose and cellulose derivatives like carboxymethyl-, hydroxyethyl-, hydroxypropyl cellulose, acetyl cellulose and other derivatives. Many reactions of this kind have been described in the literature (Graft Copolymerization of Ligno-Cellulosic Fibers; Hon., D.N.S., Ed.; ACS Symp. Series 187, 1982), but never as part of a surface modification process as described by this invention. In addition to cellulose and cellulosic derivatives, polysaccharide in general are useful to carry out this process and prepare wettable surfaces and especially biocompatible surfaces since

specific polysaccharides are well known to impart biocompatibility and can simulate surfaces characteristics of living tissue. Representative polysaccharides include dextran and dextran-derivatives, pectin, α-acrylose, glycogen, amylopectin; gums like agar, xanthan, carragenan, tragacanth, Davidson, R.L.: Handbook of Water-Soluble Gums and Resins; McCraw Hill (1980). Other very useful polymers which can be used because they are susceptible to grafting through chain transfer reactions are polyvinyls, especially poly-acrylates and polymethacrylates, poly-acrylamides and poly-methacrylamide, poly-(mono and dialkyl acrylamides) and methacrylamides, for example: poly-N-isopropylacrylamide, poly-N,N-dimethylacrylamide, and copolymers of N,N-dimethylacrylamide with N,N-dimethylaminoethyl methacrylate, methacrylic acid, 2-methyl-2-methacrylamidopropanesulfonic acid (AMPS) and other ionic comonomers; polyvinylpyrrolidone and copolymers of vinylpyrrolidone; polyvinyl alcohol and ethoxylated polyvinyl alcohols as well as silylated polyvinyl alcohol. Thus, a number of polymers A described as polymers A-1 are also useful as polymer A-2.

Other useful polymers A-2 for grafting to either vinyl- or poly-condensate type polymers B-2 are obtained by polymerization of the reaction products of IEM or other vinyl isocyanates with tris-hydroxymethylaminomethane (TRIS) and N-methyl-glucamine, and the reaction product of maleic anhydride copolymers of styrene, alkenes or vinyl ethers with polyethylene oxides, monoalkoxy-polyethylene oxide, $C_1$-$C_{20}$-alkyl-phenoxy-polyethylene oxide with 1-20 ethoxy units, fluorinated alcohols, or amino-alcohols like N-methylglucamine or aminoethanol.

A preferred embodiment of the hydrophilic polymer (A-2) is poly-N-vinylpyrrolidone, poly-N,N-dimethylacrylamide, a copolymer of N,N-dimethylacrylamide with acrylic acid, methacrylic acid, sodium styrene sulfonate, 2-methacrylamido-2-methylpropane sulfonic acid or 2-hydroxyethyl methacrylate; a copolymer of 2-hydroxyethyl methacrylate or N-tert.-butylaminoethyl methacrylate in which at least 1 mol % of the mer units are reacted with an isocyanato or oxirane functional vinyl compound; poly(vinylalcohol), ethoxylated poly(vinyl alcohol) or hydroxyethyl cellulose in which 0 to 5 mol % of the OH groups are reacted with an isocyanato or oxirane functional vinyl compound; poly(ethylene oxide) of 1000-10000 MW, bis-(aminopropyl) poly(ethylene oxide) or a block copolyurethane of poly(ethylene oxide) and polydimethylsiloxane dialkanol, with or without terminal methacrylate groups.

A more preferred embodiment of the hydrophilic polymer (A-2) is poly-N,N-dimethylacrylamide, a copolymer of N,N-dimethylacrylamide with acrylic acid, methacrylic acid, sodium styrene sulfonate, 2-methacrylamido-2-methyl-propanesulfonic acid or 2-hydroxyethyl methacrylate; ethoxylated poly(vinyl alcohol) or hydroxyethyl cellulose with 1-4 mol % of OH groups reacted with 2-isocyanatoethyl methacrylate, m-isopropenyl-α,α-dimethylbenzyl isocyanate or glycidyl methacrylate; poly(ethylene oxide) or bis-(aminopropyl)-polyethylene oxide of 900-8000 MW endcapped with 2-isocyanatoethyl methacrylate, m-isopropenyl-α,α-dimethylbenzyl isocyanate or glycidyl methacrylate.

## Polymer B

The structural, underlaying polymer B-1 to be transfer-grafted with polymer A-1 is a step-growth polymer, typically containing ester, amide, ether, urethane or urea linkages, with polyurethanes and polyureas being especially useful. This includes polyurethanes synthesized easily by one versed in the art of polyurethane technology by the two-component approach, one component being a diisocyanate-capped prepolymer, the other a di- or trifunctional curing agent, either a polyol or polyamine. For the purpose of making contact lenses, preferred prepolymers are derived from polysiloxane-di- or tri-alkanols or amines, as they are for instance described in U.S. 4,136,250 and U.S. 4,486,577 as well as from tetraalkanols consisting of polydialkylsiloxanes terminated with dihydroxy groups and which are obtained from said polysiloxane-poly alkanols or amines by reaction with molar excesses of a diisocyanate or triisocyanate, and which are subsequently reacted in a mold with an equivalent amount of a similar or same polysiloxane-polyfunctional compound, as described in copending patent application Serial No. 250,200, filed September 28, 1988.

Useful are also polyurethanes containing silyl-urethane

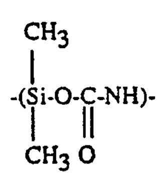

linkages, obtained by reacting the aforementioned polysiloxanyl-alkyl NCO-capped prepolymers, with a polysiloxane di- or polysiloxanol of structure $HO[SiO(CH_3)_2]_mH$, where m is 2 to 50, and which are described in copending patent application Serial No. 266,555, filed November 3, 1988.

It is, of course, possible to combine various poly-ols and poly-siloxanols, and to reverse the order of synthesis, as long as the main principles of polyurethane synthesis are followed.

Other useful polymers are the polyurethanes or polyesters obtainable from perfluorinated polyethylene oxide and polypropylene oxides diols.

Other useful step-growth polymers useful in this invention are epoxy-resin prepared from di- or polyepoxides with anhydride or amine curing agents; poly-thioethers obtained by reaction of polymeric dithiols with diepoxides, or of polymeric diepoxides with dithiols; and silicone rubbers prepared by reaction of polysiloxane-hydrides with vinyl substituted polysiloxanes, polyionenes obtained by polyquaternization of dihalides, like dichloroxylene, with bis-tert. amino-compounds. A preferred embodiment of the hydrophobic polymer (B-1) is a polyurethane or polyurea, most preferably a polyurethane. Still another preferred embodiment of hydrophobic polymer (B-1) is a polyurethane containing polydimethylsiloxane chains of 500-10000 MW, or a fluorine containing polyurethane. Still another preferred embodiment of hydrophobic polymer (B-1) is a silicone rubber.

The hydrophobic polymer (B-2) is a linear or crosslinked vinyl polymer, such as where the vinyl polymer has recurring structural units of the formula I as disclosed hereinbefore.

Typical monomers to make polymer B-2 include: linear- and branched, aliphatic, cycloaliphatic and aromatic and araliphatic acrylates and methacrylates and the corresponding amides and diamides with from 1-21 C-atoms in the ester or amide group, such as methyl methacrylate, 2-ethylhexyl acrylate and N,N-dimethylacrylamide; as well as isobornyl methacrylate, cyclohexyl acrylate and methacrylate and trimethylcyclohexyl acrylate and methacrylate; phenyl- and benzyl acrylate and methacrylate; methoxyethyl, ethoxyethyl and ethoxy-ethoxyethyl acrylate and methacrylate; acrylic and methacrylic acid; also functionalized monomers, such as 2-hydroxyethyl methacrylate, and glycidyl methacrylate; dimethyl maleate and fumarate and maleic anhydride; vinyl acetate and vinyl propionate; methyl vinyl ether and methoxyethylvinyl ether; as well as 2-hydroxyethyl- and 4-hydroxybutyl vinyl ether; N-vinylpyrrolidone; styrene and tert-butylstyrene.

Di-, tri- and poly-vinyl compounds are also useful, such as ethyleneglycol dimethacrylate, neopentylglycol diacrylate, trimethylol propane triacrylate, or divinylbenzene.

This list is not meant to be all inclusive, but only exemplary. Any commonly used free-radical polymerizable vinyl or polyvinyl compound is a useful monomer in the context of this invention, including especially also fluorine and silicone containing monomers like 1,1,2,2-tetrahydroperfluoralkyl (meth)-acrylates e.g. $C_6F_{13}$-ethyl (meth)acrylates, or hexa fluoroisopropyl methacrylate and tris-trimethylsiloxysilylpropyl methacrylate.

Preferred polymers (B-2) contain 30-100 mol % of mer-units of a linear or branched alkyl acrylate or methacrylate with 1 to 18 carbon atoms in the alkyl group; a cycloalkyl acrylate or methacrylate with 6 to 12 carbon atoms in the cycloalkyl group; phenyl- and benzyl acrylate or methacrylate; styrene; a fluorine containing acrylate, methacrylate or styrenic monomer with 3 to 21 fluorine atoms; a Si atoms containing acrylate, methacrylate or styrenic monomer with 2 to 10 Si atoms.

Also preferred are the polymerization products and copolymerization products with up to 80 % (by weight) vinyl monomers of macromeric heat or radiation curable polyvinyl substituted polyesters, polyurethanes, polyureas or polyethers of 500 to 10,000 MW as they are for instance described in U.S. 4,192,827, and 4,277,582, consisting of polyester-poly-ethylene oxide-, poly-propylene oxide-, or poly-tetramethylene oxide glycol -di-methacrylates, or in U.S. 4,136,250, and 4,486,577, consisting of polysiloxane-diol and triol di- and trimethacrylates. Because of their high inherent oxygen-permeability such polysiloxane-polymethacrylates are preferred for the production of contact lenses.

Especially preferred are the polymerization products of mixtures of these macromeric di-, tri- or tetra-vinyl substituted polysiloxanes with vinyl monomers in ratios of 80-20 % macromeric polysiloxane to 20-80 % monomer as described in U.S. 4,486,577 and U.S. 4,605,712.

Also useful are the polymerization products of divinyl derivatives of fluorinated polyether-diols, as described, for example in U.S. 4,440,918, and 4,569,962 and of perfluoroalkyl substituted diols described in U.S. 3,968,066.

## The Process

The process of the instant invention is to a process for making a product, preferably a contact lens, having a preformed, optically true, thin, conforming, continuous, integral, wettable hydrophilic polymeric

surface on an essentially hydrophobic polymer form, said surface being intimately bonded and copolymerized through a multiplicity of covalent bonds distributed essentially uniformly across the entire polymeric surface/polymer substrate interface, which comprises

(a) coating a mold with a film-forming first hydrophilic polymer (A), said polymer containing sites capable of undergoing subsequent copolymerization with a monomer or monomer mixture required to form a hydrophobic polymer (B),

(b) polymerizing the monomer or monomer mixture required to form the hydrophobic polymer (B) in contact with the coated mold whereby effecting copolymerization with the reactive sites present in the mold coating to achieve intimate bonding therewith by way of a multiplicity of covalent bonds, and

(c) releasing the product from the mold.

The process of the present invention consists of first coating the surface of a substrate or mold with the surface-forming polymer A; followed by curing or reaction-casting the second polymer B on the coated substrate or in the coated mold and releasing it from the mold after the polymerization is essentially complete.

The definitions of (A) and (B) and the more preferred (A-1), (A-2), (B-1) and (B-2) for this process are those described earlier in respect to the products of the instant invention.

Coating can easily be achieved by either roller- or knife coating if the surface is planar, or by spraying or dip coating if irregular or non-planar surfaces have to be coated. Often wetting agents have to be used to ensure good wetting of the mold surface, especially if this surface consits of poorly wettable plastics, like polypropylene.

The process of this invention can be carried out with any reation molding process, where the molded part can be either a shaped article, or a film or fiber. Polyurethanes, polyureas and epoxides are typical resins cast in molds to make a great variety of shapes, either as solid polymers or as foams. Acrylic or styrenic resins are another class of polymers often cast in molds, as are silicone rubbers. Two-component polyurethanes or moisture-curing polyurethanes can also be cast as films on surfaces and (meth-)acrylic mixtures can likewise be used to cast and cure films or coatings by irradiation with UV or electron beams. Reaction-injection-molding (RIM) is another plastics manufacturing process useful in the context of this invention, which simply adds a mold-coating step to the various casting processes followed by the transfer of the mold-coating from the mold to the molded part or film, thereby imparting its unique surface properties to the manufactured piece.

The advantage of the process of this invention over other grafting processes becomes especially apparent when one considers that not only can specific surfaces be prefabricated, before attaching them to a substrate, but when one also considers that even a low grafting efficiency will yield a permanently bound surface layer, since the grafted-on polymers form in this case the crosslinked bulk of the article, and the high-MW mold coating polymer chains need only a relatively few points of attachment.

The process of this invention thus represents essentially the reverse case of a conventional grafting process where it is always the surface which is the second polymer grafted onto a preformed bulk polymer. For that reason, conventional grafting often distorts the existing surface. The exactly pre-shaped surfaces of this invention remain unchanged and are the surfaces also of the final composite product.

Due to the specific nature of the process, where the polmeric surface coating materials is in prolonged contact with the monomer mix prior and during polymerization, it can be swollen by these monomers if enough mutual compatibility exists. This leads to the formation of interpenetrating polymer networks (IPN's) in addition to grafting and to further immobilization of the transfer-grafted surface.

The molds themselves can be made of plastics, glass or metal, but if an UV-initiated vinyl polymerization is carried out they have to be of course UV-transmissible. Often when plastic molds are used, a surface tension reducing wetting agent or oganic solvent needs to be added to the coating solution in order to achieve good wettability. The coating process can consist of dipping, spraying, roller- or knife coating or of any other commonly used coating procedure. The coatings used for grafting in the following examples have thicknesses of 0.5-1.0 microns.

A preferred embodiment of this invention is the use of PVA, ethoxylated PVA, and hydroxy alkyl cellulose (HAC) to coat molds and substrates for casting of polyurethanes or polyureas and silicone rubbers; and the use of hydroxyalkyl cellulose (HAC) and methacrylate functional HAC, ethoxylated PVA (EPVA) and methacrylate-functionalized EPVA, polyethylene oxides (PEO) containing polymers and methacrylate-functionalized PEO containing polymers, and of poly N,N-dimethacrylamide and N,N-dimethylacrylamide copolymers to coat molds for casting vinyl polymers in order to achieve wettable surfaces.

Although this invention is directed primarily toward the synthesis of products which contain an effective thickness of a hydrophilic, wettable polymer on a more hydrophobic substrate, which are, for example,

useful as contact lenses and membranes, it is within the scope of this invention to essentially reverse the nature of polymers (A) or (B) and create by the same process a more hydrophobic and/or lipophobic surface of a polymer (C) on a more hydrophilic and/or lipophilic substrate polymer (D).

Hydrophobic surfaces are characterized by a high proportion of alkylene or alkyl groups; if these groups are partially or completely fluorinated, these surfaces are in addition lipophobic to various degrees, depending on the degree of fluorination.

The instant invention is to a product which comprises

a) a preformed, thin, conforming, continuous, integral polymeric surface of a hydrophobic and/or lipophobic polymer (C) intimately bonded through a multiplicity of covalent bonds distributed essentially uniformly across the entire polymeric surface/polymer substrate interface on

b) a polymer substrate which is reaction cast and is a more hydrophilic and/or liphophilic polymer (D).

This product preferably has a polymeric surface of hydrophobic and/or lipophobic polymer (C) which is 0.1 to 500 microns in thickness.

The hydrophobic and/or lipophobic polymer (C) is selected from the group consisting of water insoluble vinyl polymers, polydienes, polyesters, polyethers, polyamides, polyurethanes, or polyureas and contain either a plurality of "step-growth-reactive" functional groups (C-1) or a plurality of "chain-growth-reactive" functional groups (C-2).

Preferred hydrophobic and/or lipophobic polymers (C) contain at least 20 % by weight fluorine.

The more hydrophilic and/or lipophilic polymer (D) is either a step-growth polymer (D-1), which is a polyester, polyamide, polyimide, polyurethane, polyurea, epoxy resin or polyionene, or is a chain-growth vinyl polymer (D-2).

Preferably (D-1) and (D-2) have the meaning of (A-1) and (A-2), respectively, whereas (C-1) and (C-2) have the meaning of (B-1) and (B-2), respectively, as hereinbefore disclosed.

A process for making a product having a preformed, thin, conforming, continuous, integral hydrophobic and/or lipophobic polymeric surface on a more hydrophilic and/or lipophilic polymer form, said surface being intimately bonded and copolymerized through a multiplicity of covalent bonds distributed essentially uniformly across the entire polymeric surface/polymer substrate interface, comprises

a) coating a mold with a film-forming first hydrophobic and/or lipophobic polymer (C) said polymer containing sites capable of undergoing subsequent copolymerization with a monomer or monomer mixture required to form a more hydrophilic and/or lipophilic polymer (D),

b) polymerizing the monomer or monomer mixture required to form the more hydrophilic and/or lipophilic polymer (D) in contact with the coated mold whereby effecting copolymerization with the reactive sites present in the mold coating to achieve intimate bonding therewith by way of a multiplicity of covalent bonds, and

c) releasing the product from the mold.

In a preferred embodiment of this process, the hydrophobic and/or lipophobic polymer (C) is selected from the group consisting of water insoluble vinyl polymers, polydienes, polyesters, polyethers, polyamides, polyurethanes or polyureas containing either a plurality of "step-growth-reactive" functional groups (C-1) or a plurality of "chain-growth (free radical) reactive" functional groups, (C-2), and the more hydrophilic and/or lipophilic polymer (D) is either a step-growth polymer (D-1), which is a polyester, polyamide, polyimide, polyurethane, polyurea, epoxy resin, or polyionene, or is a chain-growth vinyl polymer (D-2).

In a very preferred embodiment the hydrophobic and/or lipophobic polymer (C) contains at least 20 % by weight fluorine.

Products containing an effective thickness of a hydrophobic and/or lipophobic polymer (C) grafted onto a underlaying more hydrophilic and/or lipophilic polymer (D) are useful as asymmetric membranes, soil and solvent resistant polymer films, as non-wettable plastic sheets and or as release-rate controlling membranes on active ingredients containing devices and are thus another object of this invention.

The scope and usefulness of this invention is best demonstrated in the following examples, most of which are directed toward the preparation of wettable, permanent surfaces on silicone containing polymers useful as contact lens materials.

In the following examples wettability of the polymers is determined qualitatively - by handling the polymer and judging its surface feel - and quantitatively by contact angle measurements. In the examples contact angle measurements are carried out on samples stored 3 days in phosphate-buffered saline (PBS) solution. Receding contact angles are obtained on air bubbles floated to the underside of the sample immersed in distilled water; advancing contact angles are measured on water drops deposited on the surface of samples after superficial drying in a nitrogen stream.

Wettability is also qualitatively determined by observing the retraction behavior of a water droplet

smeared across the surface with a glass rod. On a scale of 1-5, 1 denotes very fast retraction, and discontinuous water film formation; 5 denotes no retraction at all and complete wettability; at the same time blocking or non-blocking (slipperiness) of the surfaces is noted.

Temperatures are given in degrees Centigrade.

The following Examples 1-11 describe the synthesis of water soluble reactive polymers A, which may be either co-reactive with condensation (step-growth) polymers (A-1), or with vinyl polymers (A-2).

Example 1: Synthesis of vinyl-substituted polyethylene oxides.

1a: Synthesis of Polyethylene Oxide Dimethacrylate (A-2 type): 43.5 g Polyethyleneoxide diol (0.03 moles, Carbowax 1450) are heated to 60° C in a 3-neck reaction flask under nitrogen. A solution of 9.31 g (0.06 mole) isocyanatoethyl methacrylate (IEM) and 0.01 g dibutyltin dilaurate (DBTL) in 52.81 g 1,1,1-trichloroethane (TCE) is added dropwise and after 1 hour is allowed to cool to room temperature. After 2 hours, IR spectroscopy shows no trace of isocyanate absorption at 2270 $cm^{-1}$.

Using the same method numerous macromeric dimethacrylates are prepared from polypropylene oxide diols, poly-tetramethylene oxide diols, polyester diols, polysiloxane alkylene-diols, perfluoroalkyl substituted diols and perfluroalkyl ether diols.

1b: Synthesis of Polyethylene Oxide Dimethacrylate: 8.0 g Pre-dried polyethylene oxide diol (0.001 moles, Carbowax 8000) are added to a solution of 0.3103 g (0.002 moles) of 2-isocyanatoethyl methacrylate in 11 g 2-butane(sieve-dried urethane grade). 0.025 g dibutyltin dilaurate catalyst is added and the reaction is stirred under nitrogen at 50° C for 2 hours when infrared spectroscopy shows no further traces of isocyanate absorption. The solvent is blown off with a nitrogen stream to yield the PEO dimethacrylate as a white powder.

1c: Synthesis of Polyethylene Oxide Dimethacrylate: 8.0 g Pre-dried polyethylene oxide diol (0.0004 moles, Carbowax 20M) are added to a solution of 0.124 g (0.0008 moles) of 2-isocyanatoethyl methacrylate in 9.5 g 2-butanone(sieve-dried urethane grade) containing 0.52 g triethylamine. The reaction is stirred under nitrogen at 50° C for 2 hours when infrared spectroscopy shows no further traces of isocyanate absorption. The solvent is blown off with a nitrogen stream to yield the PEO dimethacrylate as a white powder.

1d: Synthesis of PDMS-PEO-PDMS Dimethacrylate: 32.0 g Pre-dried polyethylene oxide diol (0.004 moles, Carbowax 8000) are capped with 1.78 g isophorone diisocyanate (0.008 moles) at 55° C using 0.0117 g dibutyltin dilaurate catalyst. After 3 hours isocyanate titrations show the theoretical % NCO endpoint. 8.35 g of a polydimethylsiloxane dipropanol (0.008 moles, 1044 MW) are added to the polyethylene oxide diisocyanate and the reaction is stirred under nitrogen. After 24 hours IR spectroscopy shows no trace of isocyanate absorption at 2270 $cm^{-1}$.

1.24 g 2-Isocyanatoethyl methacrylate and 50 g dichloromethane are added to the PDMS-PEO-PDMS diol and the reaction is allowed to stir overnight at 35° C. IR spectroscopy shows no trace of isocyanate absorption. The solvent is blown off with a nitrogen stream to yield the PDMS-PEO-PDMS dimethacrylate as a white solid (mp: 54-56° C) soluble in ethanol/water mixtures.

Using the same procedure a block copolymer-dimethacrylate is prepared using a polydimethylsiloxane diol of 2150 MW.

1e: Synthesis of PEO-PDMS-PEO-Dimethacrylate: 20.88 g Polydimethylsiloxane dipropanol (0.02 moles, 1044 MW) are capped with 8.89 g isophorone diisocyanate (0.04 moles) at 23-30° C using 0.038 g dibutyltin dilaurate catalyst. After 18 hours isocyanate titrations show the theoretical % NCO endpoint. 320 g of a polyethylene oxide diol (0.04 moles, Carbowax 8000) are added to the polydimethyl siloxane isocyanate and the reaction is stirred under nitrogen. After 24 hours IR spectroscopy shows no trace of isocyanate absorption at 2270 $cm^{-1}$.

3.10 g 2-Isocyanatoethyl methacrylate and 50 g dichloromethane are added to the PEO-PDMS-PEO diol and the reaction is allowed to stir overnight at 35° C. IR spectroscopy shows no trace of isocyanate absorption. The solvent is blown off with a nitrogen stream to yield the PEO-PDMS-PEO dimethacrylate as a white solid (mp: 56-58° C) soluble in ethanol/water mixtures.

Using the same procedure a block copolymer-dimethacrylate is prepared with a polydimethylsiloxane diol of 2150 MW.

Example 2: Synthesis of hydrophilic, reactive polymers containing randomly distributed reactive groups:

10 g Dimethylacrylamide (DMA) and 2 g (0.02 moles) t-butyl aminoethyl methacrylate (BAMA) are dissolved within a bottle in 20 g isopropyl acetate together with 0.1 g azobisisobutyronitrile (AIBN), sparged with $N_2$ and polymerized for 10 hours at 65° C, followed by 3 hours at 75° C, resulting in a viscous solution of sec.-amino functional copolymer (type A-1), containing an average of 8.3 DMA units per BAMA molecule (polymer No. 2a). By reaction with 1.86 g IEM (0.012 moles) this polymer is transformed into the corresponding methacrylate functional copolymer of type A-2 (polymer No 2b). The disappearance of the NCO-group is followed by IR.

By the same procedure a large variety of aminofunctional and derived vinyl functional copolymers can be prepared, including copolymers of 2-hydroxyethyl methacrylate, N-vinylpyrrolidone, acrylamide, methoxypolyethylene glycol methacrylate or methacrylic acid.

Example 3: Alternative method for making the polymer A-1 and A-2 of Example 2 by polymerization in bulk:

14.87 g DMA and 8.33 (0.045 moles) t-butylamino ethyl methacrylate (BAMA) are mixed together with 0.22 g benzoin methyl ether (BME), an UV-initiator. The mixture is degassed several times and polymerized by exposure to UV in 1 ml round polypropylene button molds as they are conventionally used to cast contact-lens blanks. This method produces high MW copolymers (type A-1) which after dissolution in dry methyl ethyl ketone are reacted with equivalent amounts of IEM to make the corresponding methacrylate-functional polymer (type A-2).

Example 4: Synthesis of hydrophilic polymer containing terminal reactive groups by chain-transfer oligomerization:

14.44 g DMA and 1.08 g (0.01 moles) thioglycerol are dissolved in 10 g methylethyl-ketone together with 0.01 g 2,2′-azobis(2,4-dimethylvaleronitrile) (VAZO-52). The mixture is stirred in a screw-cap sealed bottle on a water bath at 60° C for 20 hours. To the very viscous solution of dihydroxy-propyl terminated poly-DMA are added 3.1 g (0.02 moles) IEM and 0.005 g dibutyltin dilaurate (DBTL); 10 g dry methyl ethyl ketone are added and the mixture stirred at room temperature for 12 hours, after which time all isocyanate functionality has disappeared, as determined by IR.

Using the same procedure, a great variety of methacrylate terminated polymers are prepared, e.g. those of examples 5 and 6.

Example 5:

Using the procedure of example 4, 7.22 g DMA, 7.22 g hexafluoroisopropyl methacrylate and 1.08 g (0.01 moles) thioglycerol are used to make a hydroxy terminated polymer, which by subsequent reaction with 3.1 g IEM (0.02 moles) is transformed into the corresponding methacrylate terminated macromer (A-2 type).

Example 6:

5 g of a methacrylate referred to as $R_f$-PEO-MA, having the following structure:

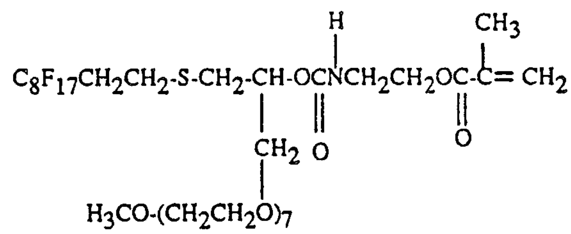

2.5 g DMA and 0.32 g thioglycerol are reacted as described above, followed by reaction with 0.9 g IEM, resulting in a fluorine and polyethylene oxide units containing polymeric methacrylate.

Example 7: Synthesis of hydrophilic reactive polymers by quaternization with vinylbenzyl chloride:

10 g DMA and 1.1 g (0.07 moles) dimethylaminoethyl methacrylate are dissolved within a bottle in 10 g isopropyl acetate together with 0.1 g AIBN. The mixture is polymerized under $N_2$ at 65° C for 5 hours, after which time 30 g ethanol are added and the reaction continued at 65° C for 3 more hours. To the viscous, clear solution 0.58 g (0.0038 moles) vinyl benzyl chloride (VBC) is added and the mixture is stirred overnight at 65° C. The resulting DMA-copolymer (type A-2) contains pendant units of:

$-CH_2CH_2\overset{\oplus}{N}(CH_3)_2-CH_2$-phenyl-$CH=CH_2/Cl^{\ominus}$ as reactive sites.

Example 8: Synthesis of hydrophilic polymers containing terminal vinyl groups by quaternization (macromer-type):

10 g 2-Hydroxyethyl methacrylate (HEMA) and 0.5 g dimethylaminomethane-thiol hydrochloride (0.0035 mole) are dissolved within a bottle in 10 g ethanol together with 0.05 g AIBN. The mixture is reacted under $N_2$ at 65° C for 5 hours , forming a viscous solution of dimethylaminoethyl-terminated hemaoligomer (type A-1). 0.32 g Vinylbenzyl chloride (VBC) (0.002 moles) are added and reacted at 65° C overnight, resulting in a poly-HEMA with terminal styrene groups and containing an average of 21 HEMA units per styrene group (type A-2). Elemental analysis of the dried, brittle copolymer confirms its structure.

| Analysis for polymer of Example 8 | | | |
|---|---|---|---|
| ($C_{54.6}H_{7.9}Cl_{0.68}N_{0.45}O_{35.3}S_{1.01}$): | | | |
| | % Cl | % N | % S |
| Calcd: | 0.68 | 0.45 | 1.01 |
| Found: | 0.9 | 0.4 | 1.0 |

Example 9: Synthesis of methacrylate-functional polyvinyl alcohol:

3 g polyvinyl alcohol (PVA) (MW = 26,000, 98.6 % hydrolyzed) are dissolved in 27 g dry dimethyl sulfoxide (DMSO) under nitrogen at 65° C in a three neck flask. The solution is allowed to cool to room temperature. Then 0.25 ml isocyanatoethyl methacrylate (IEM), are added dropwise and reacted at room temperature for 1 hour with vigorous stirring. From the resulting methacrylate functional PVA solution, a liquid film is cast on MYLAR, which is by immersion in water transferred in a solid, DMSO-free PVA-methacrylate film (A-2 type).

Example 10: Alternative method for making methacrylate-functional PVA:

0.51 g of dried polyvinyl alcohol, Elvanol 90-50G, is dropped into a stirring solution of 0.21 g isocyanatoethyl methacrylate in 1.04 g triethylamine. The slurry is stirred at room temperature until infrared analysis shows the disappearance of the NCO absorbance. The sample is diluted to 2 % solids in $H_2O$ and cast into thin films.

Example 11: Synthesis of methacrylate-functional hydroxyethyl cellulose (HEC) and ethoxylated polyvinyl alcohol (EPVA)

11a: 1.12 Hydroxyethyl cellulose (cellosize QP-100 M; MW: 1,000,000); is added to a stirred solution of 0.43 g 2-isocyanatoethyl methacrylate (IEM) and 1.00 g of 10 %triethylamine/90 % 2-butanone. The reaction exhibits a mild exotherm and 1.903 g 2-butanone is added to facilitate stirring the thick slurry. After stirring the slurry for 8 hours, IR analysis of the solution shows no -NCO remaining in the sample. A slightly hazy 2 % aqueous solution is obtained by heating the sample at 50° C for 2 hours and then stirring

overnight. The polymer contains 1 double bond per glucose unit of HEC.

11b: Using the same procedure, HEC of MW 214,000 is also functionalized with IEM.

11c: 0.88 g (0.01 eqv) Ethoxylated PVA (Polysciences) is stirred as a slurry in 3.1 g of a 10 % solution of IEM (0.002 eqv), and 3 % triethylamine in methyl ethyl ketone overnight at room temperature, after which time all NCO has disappeared from the supernatant liquid. The slurry is dissolved in water to give a 1 % clear solution. On drying in air at 100 °C a clear, crosslinked film is obtained which swells in water to 94 % (in contrast to unmodified E-PVA).

Examples 12-34: Synthesis of polysiloxane-acrylate rubbers with wettable surfaces by transfer-grafting of A-2 type polymer thereon.

Example 12:

A 5 % solution of the dimethacrylate solution in 1,1,1-trichloroethane (TCE) of example 1a is sprayed onto a 0.1 mm thick MYLAR sheet and left to dry, forming a translucent film. The coated MYLAR sheet is used to assemble a flat glass mold, 5 inches by 5 inches, with the MYLAR lining the mold and 1 mm thick silicone cord acting as spacer. The assembly is held together by spring loaded clamps.

Into this mold is poured a mixture of 50 % polysiloxane-dimethacrylate obtained by reacting first 3 moles isophorone diisocyanate with 2 moles of a bishydroxypropyl-polysiloxane of MW 2400, followed by endcapping the diisocyanato prepolymer with 2-hydroxyethyl methacrylate (as described in U.S. 4,486,577), 30 % 2-ethylhexyl acrylate (EHA) and 20 % methyl methacrylate (MMA) containing 0.2 % benzoin methyl ether (BME) as UV-initiator. The mold is exposed to UV radiation for 5 hours, after which time it is disassembled. The polymer sheet is removed and rinsed in 80 °C water for 4 hours; samples are stored in pH 7.4 buffered saline solution for 3 days prior to contact angle measurements.

Examples 13-18:

The A-1 type and A-2 type polymers of Examples 2a, 4, 5, 7, 8, 9, as solutions adjusted to 10 % solids with ethanol, are used to draw films on MYLAR using a 0.003 inch knife-coater. Molds are assembled and used to cast 1 mm sheets of a polysiloxane-acrylate as described in example 12, but consisting of 70 % polysiloxane dimeth acrylate and 15 % each of methyl methacrylate (MMA) and 2-ethylhexyl acrylate (EHA). After the polymer is removed, it is rinsed in 80 °C water for 4 hours and dried. Samples are cut and stored in pH 7.4 buffered saline solution for 3 days. Receding contact angles are measured by the air bubble method on samples immersed in water. Advancing contact angles are measured on air dried surface with water.

In the following table contact angles for the non-vinyl functional precursor polymer (A-1 type) are in brackets.

The table shows that a considerably better wettability is obtained with the methacrylate-functionalized polymer coatings of type A-2 than with the non-methacrylate functional precursor polymer type A-1, especially when measured by receding contact angles.

| | | Contact Angles (°) | | | |
|---|---|---|---|---|---|
| Example | A-type polymer of example | Adv. | | Rec. | |
| | | A-2 | (A-1) | A-2 | (A-1) |
| 13 | 2 | 75 | (96) | 35 | (50) |
| 14 | 4 | 76 | (102) | 19 | (42) |
| 15 | 5 | 90 | (102) | 35 | (42) |
| 16 | 7 | 100 | (92) | 21 | (43) |
| 17 | 8 | 90 | (100) | 34 | (49) |
| 18 | 9 | 68 | (95) | 20 | (50) |

Examples 19-22:

Transfer grafting of hydroxyethyl-cellulose (HEC) with (A-2 type) and without (A-1 type) methacrylate functionality, onto polysiloxane-polyacrylate consisting of 70 % polysiloxane-dimethacrylate of example 12, 20 % EHA, 5 % DMA and 5 % MMA: MYLAR sheets are coated with 0.5 % solutions of HEC and methacrylate-functional HEC of example 11 using a 0.003 inch knife-coater. The coated sheets are allowed to dry for 10 hours in air and used as mold liners, as described to cast 0.5 mm thick films.

After polymerization the polymer sheets are soaked in 90 % aqueous ethanol for 12 hours to remove extractables, dried and then tested as described. The results show that excellent grafting is obtained with HEC alone as well as with the methacrylate-functional HEC.

| Ex. | Polymer-A | | | Wettability by: | | | |
|---|---|---|---|---|---|---|---|
| | of Ex. | (MW) | Type | Retraction Test | Blocking | Contact Angle (°) | |
| | | | | | | Adv. | Rec. |
| 19 | (HEC) | ($1x10^6$) | A-1 | 5 | No | 22 | 73 |
| 20 | 11a (HEC) | ($1x10^6$) | A-2 (A-1 + IEM) | 5 | No | 25 | 36 |
| 21 | (HEC) | ($214x10^3$) | A-1 | 5 | No | 23 | 99 |
| 22 | 11b (HEC) | ($214x10^3$) | A-2 (A-1 + IEM) | 5 | No | 23 | 45 |
| Polymer of Example 12, cast on uncoated MYLAR alone | | | | 1 | Yes | 95 | 45 |

Example 23:

Using the same procedure as in examples 12-22, the IEM-modified ethoxylated PVA of example 11c is used for transfer-grafting onto a polymer consisting of 70 % polysiloxane dimethacrylate of example 12, 17 % tris-(trimethylsiloxanyl)-silyl propyl-methacrylate, and 13 % MMA. Non-blocking surfaces with excellent and permanent wettability are obtained (advancing contact angle = 40°, receding = 45°).

Examples 24a-24f:

The polyethylene oxide (PEO) dimethacrylates and PEO-polydimethylsiloxane block copolymer dimethacrylates of examples 1b to 1e are dissolved in water to make 1 % solutions and coated on flat MYLAR sheets using a 0.03 inch knife-coater. The air-dried coated films are used as mold liners to prepare polysiloxane-polyacrylate polymers, as described in example 23. The results are shown in the table below; most characteristic for these surfaces is the low friction non-blocking behavior, when compared to the control.

| Ex. No. | Pol.A of Ex. | Schematic Polymer Structure | Appearance and Behavior in the Dry State | Wettability After 15 Hours in Boiling Water: | |
|---|---|---|---|---|---|
| | | PDMS-[PEO]-PDMS MW | | Contact Angles | |
| | | MW | | Air/$H_2O$ | $H_2O$/Air |
| | | | | receding[1] | adv.[2] |
| 24a | 1d | 2150-[8000]-2150 + IEM | non-blocking; med. to fast retraction. Surface crystallinity | 42 | 82 |
| 24b | 1d | 1044-[8000]-1044 + IEM | non-blocking, matte; med. retraction; less crystalline | 41 | 62 |
| 24c | 1c | -[20000]- + IEM | non-blocking; surface haze, crystallinity slow retraction | 41 | 72 |
| 24d | 1b | -[8000]- + IEM | non-blocking; very slow retraction crystalline | 35 | 60 |
| | | [PEO]-PDMS-[PEO] | | | |
| | | MW | | | |
| 24 | 1e | [8000]-1044-[8000] + IEM | non-blocking, very crystalline; slow retraction | 36 | 63 |
| | 1e | [8000]-2150-[8000] + IEM | non-blocking, slightly crystal-retraction | 25 | 56 |
| | | unmodified control | severe blocking; fast retraction | 48 | 65 |

[1] bubble method.
[2] sessile drop.

<u>Examples</u> <u>25-34</u>: Transfer grafting of other polysaccharides and of proteines onto polysiloxane-polyacrylate:

1 % Aqueous solutions of the listed polymers are cast on MYLAR with a 0.003 inch knife-coater and after air drying for 12 hours are used as described as molds to cast 0.5 mm thick films of the polysiloxane-polyacrylate of Examples 19-22. The cast 0.5 mm thick sheets are worked up as described in Examples 19-22 and tested. All samples are clear and have greatly improved wettability, especially when judged by retraction time and blocking behavior.

| Ex. | Polymer (A-1 type) Coating | Wettability by: Retraction Test | Blocking | Contact Angles (°) Adv. | Rec. |
|---|---|---|---|---|---|
| 25 | Dextran, MW: $5x10^5$ | 5 | No | 99 | 14 |
| 26 | Dextran, MW: $15x10^3$ | | No | 96 | 17 |
| 27 | Hydroxypropylmethyl cellulose (methocel-ESO, DOW) | 5 | No | 65 | 38 |
| 28 | Gelatin | 4 | No | 92 | 22 |
| 29 | Pectin | 4 | No | 99 | 25 |
| 30 | Albumin | 4 | No | - | - |
| 31 | Glucose | 4 | No | 91 | 22 |
| 32 | Glucosan | 4 | No | 73 | 21 |
| 33 | Hyaluronic acid | 4 | No | 90 | 22 |
| 34 | Aminodextran | 5 | No | 81 | 25 |

Example 35: Synthesis of polysiloxane-tetramethacrylate:

Poly-dimethyl-siloxane-tetraalkanols of structure II:

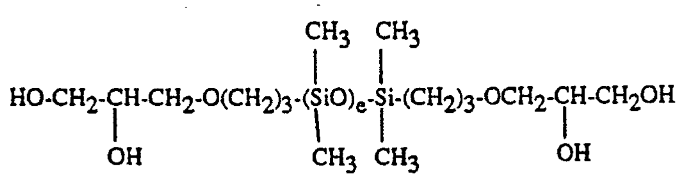

where e is 12, (26.7 g), 40 (19.49 g) or 77 (19.0 g) is reacted in bulk with equivalent amount of isocyanatoethyl methacrylate (5.8 g; 3.53 g; or 1.87 g) using 0.02 % DBTL as catalyst until all NCO disappears (by IR). The resulting tetramethacrylate of MW 1846, 4024 or 6907 and dimethylsiloxane contents of 68,86 or 92 % respectively is used as a comonomer to make polysiloxane-polyacrylates useful as oxygen permeable soft contact lens materials.

Examples 36-44:

Using the polysiloxanedimethacrylate of example 12, the polysiloxane-tetramethacrylates of example 35 and tris(trimethylsiloxy)silyl propylmethacrylate (Si4-MA), silicone-acrylate rubber sheets of 0.5 mm thickness are cast using MMA and 0.5 % ethylene glycol dimethacrylate as other comonomers (0.2 % BME as photoinitiator). HEC OP-100M (Union Carbide) cast on MYLAR from 0.5 % solution with a 0.003' knife coater is used as polymer A for transfer grafting on one side of the mold, the other side (MYLAR) serving as control (numbers in brackets).

| Ex. | Composition % | | | | | |
|---|---|---|---|---|---|---|
| | Polysiloxane- | | | | Wettability by: | |
| | di-MA | tetra-MA | e | MMA | Retraction-test | Blocking |
| | (Ex. 12) | (Ex. 35) | | | (control in bracket) | |
| 36 | 70 | 15 | 12 | 15 | 5 (1) | No (Yes) |
| 37 | 70 | 15 | 40 | 15 | 5 (1) | No (Yes) |
| 38 | 70 | 15 | 77 | 15 | 5 (1) | No (Yes) |
| 39 | 70 | 30 | 12 | - | 5 (1) | No (Yes) |
| 40 | 70 | 30 | 40 | - | 5 (1) | No (Yes) |
| 41 | 70 | 30 | 77 | - | 5 (1) | No (Yes) |
| | | Si4-MA | | | | |
| 42 | 70 | 15 | | 14.5 | 5 (1) | No (Yes) |
| 43 | 70 | 17 | | 12.5 | 5 (1) | No (Yes) |
| 44 | 70 | 20 | | 9.5 | 5 (1) | No (Yes) |
| | | | | | Contact Angles ($^\circ$) | |
| | | | | | Adv. | rec. |
| | | | | Ex. 42 | 53 (91) | 27 (49) |

Examples 45-50: Synthesis of poly-N,N-dimethylacrylamide (DMA) and ionic DMA-copolymers:

10.9 g N,N-Dimethylacrylamide (DMA) and 2.58 g methacrylic acid (MAA) are dissolved in 40 g water together with 0.07 g VAZO-52 as initiator. After purging with nitrogen the mixture is stirred in a bottle at 60$^\circ$ C for 18 hours. The very viscous solution is diluted with water to give 260 g of 5.3 % polymer solution.

Using essentially the same procedure, the listed copolymers are prepared as aqueous solution including a homopolymer of DMA. After dilution to 0.5 % with water and addition of 0.01 % LODYNE S-100 (a fluorochemical surfactant; CIBA-GEIGY) films are cast on MYLAR, using a 0.03 inch knife coater, and used as mold liners to cast polysiloxane-polyacrylate compositions of example 42. Also used as mold coating is poly-N-vinyl pyrrolidone (PVP) (90,000 MW, GAF Corp.), applied as the other polymers; untreated MYLAR is used as control.

All polymers are water clear, have extremely wettable and slippery surfaces, which remain so even after 15 hours in boiling water and aging for 96 hours at 80$^\circ$ C.

| | | Wettability by: | | |
|---|---|---|---|---|
| Ex. | Polymer Composition 1) | Retraction | Blocking | Contact Angles (Receding) |
| 45 | $[-(DMA)_{11}(MAA)_3]_n$ | 5 | No block | 19 |
| 46 | $[-(DMA)_{11}(AMPS)_3]_n$ | 5 | No block | 16 |
| 47 | $[-(DMA)_{11}(DMAEMA)_3-]_n$ | 5 | No block | 23 |
| 48 | $[-(DMA)_{22}(DMAEMA)_3-(AMPS)_3-]$ | 5 | No block | <10 |
| 49 | PVP (K-90; GAF Corp.) | 5 | No block | 31 2) |
| 50 | poly-DMA | 5 | No block | 18 |

1) AMPS: 2-methacrylamido-2-methylpropanesulfonic acid
DMAEMA: N,N-dimethylaminoethylmethacrylate

2) 13° after 1/2 hour in boiling water; 22° after 96 hours at 80°C.

The unmodified polymer serving as control exhibits very fast retraction time (1), blocking and a receding contact angle of 53°.

Examples 51-70: Usefulness of transfer-grafting onto polycondensation (step-growth) polymers using A-1 type polymers as mold coatings.

Example 51:

A 5 % aqueous polyvinyl alcohol (PVA, 99 % hydrolyzed, MW: 116,000) solution is used to make a 1 micron thick film on a MYLAR sheet by knife-coating and drying in air. The coated MYLAR sheet is used to line a glass mold, as described in example 1. Into this mold is poured a mixture of 19.57 g (2.67 mmoles) poly-dimethylsiloxane triisocyanate, obtained by reaction of 1 mol of a polysiloxane-trialkanol of general structure:

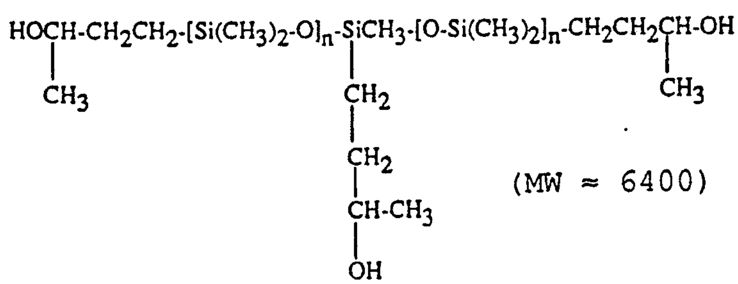

(MW ≈ 6400)

with 3 mol isophorone diisocyanate, and 1.22 g (3.87 mmoles) octamethyltetrasiloxane diol (TSiD) [HO-(Si-$(CH_3)_2$-O)$_4$-H], containing 0.01 % DBTL as catalyst.

The mold is heated to 60°C for 12 hours and disassembled. A clear, flexible silicone-O-silyl-urethane rubber is obtained with extremely wettable surfaces, which remain so even after aging for 4 days in 80°C water.

Example 52:

Using the same procedure and mold coating as in example 51 a polysiloxane O-silyl-polyurethane is cast, but using instead for B-1 a mixture of 21.55 g (3.28 mmole) of the polydimethyl-siloxane-triisocyanate obtained by reacting 1 mol of a PDMS-trialkanol of MW ~ 6700 (DOW CORNING silicone fluid '1248') with 3 mol isophorone diisocyanate, and 1.55 g (4.94 mmole) octamethyltetrasiloxane diol, containing 0.01 % DBTL as catalyst.

Example 53:

Using the same procedure as in example 51 a polysiloxane polyurethane rubber sheet is cast between PVA-coated MYLAR sheets, but using for the polyurethane composition a mixture of 15.40 g (2.09 mmole) of the PDMS-triisocyanate of example 51 and 0.87 g (3.13 mmole) 1,3-bis-(hydroxybutyl) tetramethyl disiloxane (BHTSi).

Example 54:

Using the same procedure as in example 51 a polysiloxane polyurethane is cast between PVA-coated MYLAR sheets, but using a mixture of 13.89 g (2.00 mmole) of the PDMS-triisocyanate of example 52 and 6.64 g (3.00 mmole) of a polydimethylsiloxane di-alkanol (MW 2212), of structure:

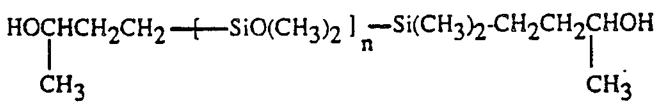

(MW = 2212)

The sheets prepared in examples 51-54 are rinsed with hot water (60 °C) for 4 hours and dried. The clear, non-tacky flexible rubber sheets are immediately rewettable and have a slippery feel. After rinsing for 4 hours in 60 °C water and 3-day storage in buffered saline, their contact angles are measured:

| Polymer of Example | Contact Angles (°)* | |
|---|---|---|
| | Adv. | Rec. |
| 51 | 35 (91) | 14 (24) |
| 52 | 32 (86) | 20 (22) |
| 53 | 77 (97) | 23 (33) |
| 54 | 71 (98) | 24 (26) |

* values for untreated controls in brackets

Example 55-56:

Using the hydroxy- and amino functional polymers described in examples 2 and 8, but without having been reacted with IEM, as reactive mold-coatings A-1, polysiloxane-polyurethanes are prepared as in example 53 and their surface wettability measured. In both cases wettability is greatly increased over the control.

| Ex. | A-1 of Ex. | Contact Angles (°)* | | Wettability by | |
|---|---|---|---|---|---|
| | | Adv. | Rec. | Retraction Test | Blocking |
| 55 | 8 | 75 (92) | 26 (42) | 4 (1) | No (Yes) |
| 56 | 2a | 88 (95) | 31 (46) | 4 (1) | No (Yes) |

* values for untreated controls in brackets

Examples 57-62:

The following examples show the effect of various hydrophilic reactive mold coatings on the wettability of PDMS-polyurethanes. The polyurethane is one prepared according to the process of example 51 from a polydimethylsiloxane-trialkanol of MW 6400, reacted with isophorone-diisocyanate (IPDI) and a polydimethylsiloxane-di-alkanol of MW 2212.

The mold coatings for transfer-grafting are applied as 1 % aqueous solutions with a 0.003 inch knife coater, followed by air drying for 12 hours.

| | | Wettability by: | | | |
|---|---|---|---|---|---|
| Ex. No. | Polymer-A Coating | Contact Angle (°) | | Retraction Test | Blocking |
| | | Adv. | Rec. | | |
| | | (Values for uncoated surfaces in brackets) | | | |
| 57 | Hydroxyethyl cellulose M214,000 | 66° (104) | 20 (48) | 5 (1) | No (Yes) |
| 58 | Hydroxyethyl cellulose M1,000,000 | 67° (104) | 20 (49) | 5 (1) | No (Yes) |
| 59 | Hydroxypropyl cellulose | 65° (97) | 23 (47) | 5 (1) | No (Yes) |
| 60 | Pectin | 76° (98) | 27 (51) | 5 (1) | No (Yes) |
| 61 | Hydroxypropylmethyl cellulose (Methocel ESO, DOW) | 74° (97) | 26 (49) | 5 (1) | No (Yes) |
| 62 | Aminodextran | 65° (97) | 23 (50) | 5 (1) | No (Yes) |

Example 63:

The O-silyl-polyurethane of example 51 is cast as a 1 mm sheet between MYLAR coated with hydroxyethyl cellulose (MW = $1 \times 10^6$). A clear and extremely wettable silicone rubber is obtained with contact angles of 23° advancing and 17° receding, respectively.

Examples 64-67:

NCO-capped polysiloxane prepolymers are prepared by capping with IPDI polysiloxane-dialkanols of the following structures:

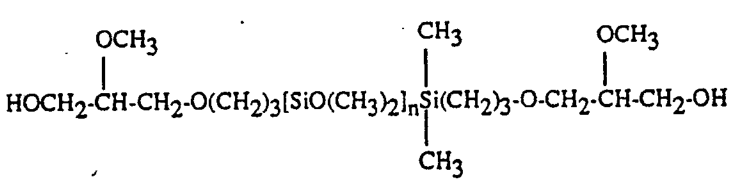

III

where n is 10, 24 or 50. Using the procedure of example 51, these prepolymers (III) are used to formulate and cast 2-component polyurethanes, using equivalent amounts of polysiloxane-tetraalkanols of structure II as shown in example 35, where e is 12, 40 or 77.

These polysiloxane urethanes are cast in glass molds lined with MYLAR, which are coated with the indicated hydrophilic polymers, as described in example 51; the results are shown in the table below, with the values for unmodified control (cast between uncoated MYLAR sheets) in brackets.

| Example | Polymer made from | | Hydrophilic Coating |
|---|---|---|---|
| | III + II | | A-1 |
| | with n | with e | |
| 64 | 10 | 40 | Hydroxyethyl Cellulose |
| 65 | 24 | 77 | Ethoxylated PVA |
| 66 | 50 | 12 | Pectin |
| 67 | 24 | 12 | Hydroxypropyl Cellulose |

| Example | Wettability (unmodified control in brackets) | | | |
|---|---|---|---|---|
| | By Retraction Test | By Blocking | By Contact Angle (°) | |
| | | | Adv. | Rec. |
| 64 | 5 (1) | No (Yes) | 66±3 (86±2) | 27±3 (39±1) |
| 65 | 5 (1) | No (Yes) | 42±1 (85±2) | 18±2 (24±2) |
| 66 | 5 (1) | No (Yes) | 50±1 (86±1) | 17±2 (23±2) |
| 67 | 5 (1) | No (Yes) | 74±3 (86±2) | (20±1) (28±2) |

Example 68:

Synthesis of wettable, low-friction films: A MYLAR sheet is coated with poly N,N-dimethylacrylamide (PDMA), using a 5 % aqueous solution and 0.02 % fluorinated surfactant LODYNE S-100 (CIBA-GEIGY) as wetting agent and a 0.003 inch knife-coater. The dried PDMA film has a thickness of ~ 4 microns. This film is overcoated with a monomer-mixture consisting of 48 % polytetramethyleneoxide-dimethacrylate (Polytetramethylene oxide diol (MW 2000) reacted with 2 moles isophorone diisocyanate, followed by end capping with 2-hydroxyethylmethacrylate), 32 % 2-hydroxyethyl methacrylate, 16 % N,N-dimethylacrylamide and 4 %trimethylolpropane trimethacrylate, and containing 1 % diacetoxyacetophenone (DEAP) as UV-initiator. The coating is exposed to UV-irradiation for 10 minutes under nitrogen, and stripped from the MYLAR support.

A tough, clear 0.2 mm thick film is obtained which is blocking, rubbery and non-wetting on the upward facing side, while the PDMA-grafted side is extremely wettable and exhibits very low friction and high abrasion-resistance in the wetted state, but is non-blocking in the dry state.

Example 69:

The process of example 68 is repeated, using the same hydrophilic poly(dimethylacrylamide) mold coating, but as monomers for polymer B a mixture of 50 % (by weight) $R_f$-ethyl methacrylate, where $R_f$ denotes a $C_nF_{2n+1}$-group with a chain length distribution of n = 6/8/10/12 = 0.2/70.3/26.0/1.6, (% by weight); 49.8 % methyl methacrylate and 0.2 % ethylene glycol dimethacrylate. After UV-irradiation, a hard,

clear polymer is stripped of the MYLAR substrate, which has a completely wettable and in the wet state slippery surface on the MYLAR contacting side, but is extremely hydrophobic on the opposite, unmodified side.

Example 70: Synthesis of wettable silicone rubber by transfer-grafting:

A mixture of vinyl terminated poly(dimethylsiloxane) and poly(methylhydrogen siloxane) curing agent (a system commercially available from DOW CORNING, under SYLGARD™-184) is degassed and poured into a glass mold (25 x 25 cm, 0.5 mm rubber spacer) lined with MYLAR which is coated with a 0.01 mm film of ethoxylated polyvinylalcohol (EPVA), as described in example 51. After 4 hours at 65 °C and 1 hour at 85 °C, a clear silicone rubber sheet is removed. It has a completely wettable and low-friction surface, is unaffected by 1 hour in boiling water and not abraded by OPTICLEAN abrasive cleaner (300 manual rubs). In contrast, a silicone rubber sheet synthesized in the absence of the EPVA mold coating is extremely hydrophobic and strongly blocking.

The following examples demonstrate the usefulness of transfer-grafting for the synthesis of wettable silicone rubber contact lenses.

Example 71: Synthesis of wettable polysiloxane-urethane-polyacrylate contact lenses:

Polypropylene contact lens molds are dipcoated with 0.5 % solution of hydroxyethyl cellulose (HEC QP-100M, Union Carbide) in 50 % aqueous ethanol and containing 0.01 % of fluorinated surfactant (LODYNE S-100; CIBA-GEIGY). The molds are left to dry for 1 hour at 50 °C and are then used to cast lenses by depositing 2 drops of a casting solution into the concave part, closing the mold, clamping it and exposing it to UV for 2 hours, followed by heating to 80 °C for 2 hours. The casting solution consists of 70 parts of the polydimethylsiloxane dimethacrylate of example 12, 20 parts 2-ethylhexyl acrylate, 5 parts N,N-dimethylacrylamide and 5 parts methyl methacrylate and contains 0.2 % BME as photo-initiator and 0.1 % t-butyl peroctoate as thermal initiator. After polymerization is finished, the mold is disassembled and the lens removed by swelling in 70 % aqueous ethanol. After a 5 minute rinse in boiling water, the clear and completely wettable lens is equilibrated in pH 7.4 saline solution.

Example 72 a-d:

Using the same procedure as in example 71, contact lenses are prepared by polymerizing 70 parts polydimethylsiloxane dimethacrylate of example 12, 20 parts tris-(trimethylsiloxy)silylpropyl methacrylate, 9.5 parts methyl methacrylate and 0.5 parts ethylene glycol dimethacrylate and containing 6 % methyl ethyl ketone, in molds dipcoated with:

(a) methacrylate functional hydroxyethyl cellulose of example 11a;
(b) p-DMA-ionomer used in example 48;
(c) poly-dimethylacrylamide of example 50; and
(d) ethoxylated PVA (Polyscience).

The lenses obtained with all four coatings are clear, flexible and very wettable.

Example 73: Synthesis of wettable polysiloxane-polyurethane contact lenses:

Polypropylene contact lens molds are dipcoated with a 0.8 % solution of hydroxyethyl cellulose (HEC QP-100m, Union Carbide, MW 1,000,000) in aqueous isopropanol containing 0.1 % of fluorinated surfactant (LODYNE S-100, CIBA-GEIGY). The molds are dried overnight at 50 °C and then used to cast lenses by depositing 2 drops of a casting solution into the concave part, closing the mold, clamping it, and curing at 80 °C for one hour. The casting solution consists of 6.68 g, (1.04 mmole) of polydimethylsiloxane triisocyanate (MW 6400) and 0.44 g (1.58 mmole) bis(4-hydroxybutyl)tetramethyldisiloxane (example 52), containing 0.02 % DBTL catalyst. After curing, the mold is opened and a clear, highly wettable contact lens is obtained.

Example 74:

Polypropylene contact lens molds are dipcoated with a 2 % aqueous solution of ethoxylated poly(vinyl alcohol (Polysciences) containing 0.1 % of fluorinated surfactant (LODYNE S-100, CIBA-GEIGY). The molds are dried overnight at 50 °C and then used to cast lenses by depositing two drops of a casting solution into the concave part, closing the mold, clamping it, and curing at 80 °C for one hour. The casting solution consists of 5.49 g (1.156 mmole) polydimethyl siloxane diisocyanate (MW 4200) and 0.71 g, (0.578 mmole) tetrahydroxypolydimethyl siloxane (MW 1200) (example 65), containing 0.02 % DBTL catalyst. After curing the mold is opened and a clear, highly wettable contact lens is obtained.

Example 75: Durability of transfer-grafted coatings to abrasion:

The materials of example 52 are abraded by a crockmeter and a abrasive lens cleaning solution. Comparison of contact angles for abraded and control samples shows that the surface wettability is not diminished by abrasion.

(1) Opticlean, abrasive contact lens cleaner, containing particles of silica is applied to the 1.00 mm thick sample and rubbed with fingers for the minutes per application for a total of fifty minutes.

| Contact Angles: | Advancing: $H_2O$/Air | Receding: Air/$H_2O$ |
|---|---|---|
| after abrasion | 44° ± 4° | 23° ± 1° |
| before abrasion | 40° ± 2° | 19° ± 2° |
| uncoated sample | 98° ± 2° | 30° ± 2° |

(2) Crockmeter Testing: a 6 inch (15.24 cm) piece of the same PVA coated silicone-urethane rubber of example 52 is glued inside an aluminium pan and placed beneath the arm of the crockmeter which has a mass of 1343 grams. A second piece of PVA-grafted rubber is clamped around the plexiglass cylinder to the end of the arm of the crockmeter. The pan is filled with 1/4 inch (6.35 mm) distillled water and the material is abraded with a 5 1/2 inch (14 cm) stroke 24,000 times.

| Contact Angles: | Advancing: $H_2O$/Air | Receding: Air/$H_2O$ |
|---|---|---|
| after abrasion | 56° ± 2° | 26° ± 1° |
| before abrasion | 40° ± 2° | 19° ± 1° |

Example 76: Synthesis of polyurethane castings with very wettable surfaces

(a) Polypropylene oxide, MW 1000, (1.58 g, 1.55 mmole) is mixed with 11 equivalents of butanediol (1.53 g, 17.07 mmole) and twelve equivalents of 2,2,4-trimethylhexane diisocyanate (TMDI) (3.91 g, 18.62 mmole) with stirring at 45 °C. The formulation becomes soluble after 90 minutes at this temperature and is poured into a 5 inch (12.7 cm) square by 1.00 mm thick mold, the surface of which is coated with HEC from a 0.8 % solution as previously described. The mixture is cured at 80 °C for 10 hours without catalyst. The polyurethane with HEC grafted is removed easily from the MYLAR mold and is rinsed with 50 °C water for 4 hours. A highly wettable surface remains on the urethane.

(b) Butanediol (5.30 g, 58.81 mmole) and TMDI (12.35 g, 58.81 mmole) are stirred at 50 °C with 6 mg of DBTL catalyst. Solubility occurs within 60 minutes and the formulation is poured into a 5 inch (12.7 cm) square 1.00 mm thick HEC lined mold as previously described. Curing is complete after 6 hours at 80 °C. The polyurethane is removed from the mold and rinsed in 50 °C water for 4 hours, leaving a highly wettable surface.

Example 77: Formation of a hydrophobic integral surface on a very hydrophilic polymer by transfer-grafting:

A MYLAR sheet is knife-coated from a 0.5 % solution in 1,1,2-trifluoro-trichloro ethane (FREON-113) with a perfluoroalkyl substituted 1,2-polybutadiene of ~ 500,000 MW, obtained by free-radical addition of perfluoroalkyl-ethylene thiol ($C_8F_{13}/C_8F_{17}/C_{10}F_{21}$ ratio ~ 1/2/1) onto 1,2-polybutadiene (RB-610, JSR Co.) and containing 53 % fluorine and 6 % sulfur. The ~ 0.001 mm thick fluorinated and vinyl-unsaturated coatings are used as mold liners for 4"x4" (10.16cm x 10.16 cm) molds, 0.5 mm thick. The molds are filled with a mixture of 35 parts N,N-dimethylacrylamide, 65 parts 2-ethylhexyl acrylate and containing 0.1 % ethylene glycol dimethacrylate and 0.2 % benzoin methyl ether. The mold is exposed to UV for 5 hours, after which time the polymer sheet is removed, which is clear and very hydrophobic (non-wettable).

Example 78:

10 g of the polymer composite of example 77 are immersed in distilled water and the rate of water uptake is measured and compared to that of a control polymer of the same bulk composition, but without grafted surface layer. Whereas the control reaches its equilibrium water content of 14 % (by weight of swollen polymer) after only one day, the polymer composite of example 77 has gained only 2 % water after 1 day and reaches its equilibrium water content of 14 % only after one month immersion. The drying rate is likewise very slow and the polymer surface remains smooth, glossy and non-tacky.

The example shows that the diffusion rate of water and, presumably, of aqueous or organic solutions can be controlled and influenced over a wide range of diffusion rates.

Examples 79-82:

A 0.5 % solution of poly-(dimethylacrylamide) $MW_w$ approximately 1 x $10^6$, by GPC) in water and containing 0.01 % LODYNE S-100 as a wetting agent, is coated onto a clear MYLAR sheet, using a 0.003 inch knife coater. Following the procedure of example 12, the coating is dried at 50°C for one hour and 4x4 inch cut sheets of the p-DMA coated MYLAR are used to line glass molds, for casting poly-acrylic sheets with the compositions listed below.

The polysiloxane-dimethacrylate used in these examples is obtained either by reaction of 1 mol α,ω-bis-hydroxypropyl-polysiloxane of 2400 MW with, first, 2 moles isophorone diisocyanate, followed by endcapping with 2 moles 2-hydroxyethyl methacrylate (= PDMS-di-urethane MA; examples 79-81); or by reaction of 1 mol α,ω-bis-aminopropyl polysiloxane of 1766 MW with 2 moles 2-isocyanato-ethyl methacrylate (=PDMS-urea-diMA; example 82).

| Ex. No. | Composition of Polymer | % |
|---|---|---|
| 79 | PDMS-di-urethane MA | 40 |
| | $C_6F_{13}CH_2CH_2OCO-CH=CH_2$ | 40 |
| | methoxy-ethyl acrylate | 20 |
| 80 | PDMS-di-urethane MA | 48 |
| | hexafluoro-isopropyl methacrylate | 28 |
| | methacrylic acid | 9 |
| | ethyleneglycol dimethacrylate | 15 |
| 81 | PDMS-di-urethane MA | 35 |
| | trifluoro-ethyl methacrylate | 28 |
| | trimethyl-cyclohexyl methacrylate | 18 |
| | methacrylic acid | 9 |
| | ethylene glycol dimethacrylate | 10 |
| 82 | PDMS-urea-di MA | 35 |
| | hexafluoro-isopropyl methacrylate | 28 |
| | trimethyl-cyclohexyl methacrylate | 28 |
| | methacrylic acid | 9 |

The polymer sheets, together with the grafted p-DMA mold coatings, are released from the molds and have extremely wettable, low-friction surfaces. In example 79 a soft, low modulus polymer is obtained, which is useful as a soft contact lens material; in examples 80-82 rigid, high modulus polymers are obtained, which are useful as rigid, gas permeable contact lens materials.

## Claims

1. A product which comprises
(a) a preformed, optically true, thin, conforming, continuous, integral, wettable hydrophilic polymeric surface of hydrophilic polymer (A) intimately bonded through a multiplicity of covalent bonds distributed essentially uniformly across the entire polymeric surface/polymer substrate interface on
(b) a polymer substrate which is reaction cast and is an essentially hydrophobic polymer (B).
2. A product according to claim 1, which is a contact lens.
3. A product according to claim 1 or 2 wherein the hydrophilic polymeric surface of hydrophilic polymer (A) is 0.1 to 500 microns in thickness.
4. A product according to claim 1 wherein the hydrophilic polymer (A) is either a polymer (A-1) which contains a plurality of "step-growth reactive" functional groups and is selected from the group consisting of water soluble vinyl polymers, carbohydrate polymers, polyethylene oxide or polyethylene oxide-containing polymers, and polyamines, or is an essentially water soluble polymer (A-2) bearing a plurality of "chain-growth (free radical) reactive" functional groups.
5. A product according to claim 4 wherein the hydrophilic polymer (A) is a polymer (A-1) which contains a plurality of "step-growth reactive" functional groups and is selected from the group consisting of water soluble vinyl polymers, carbohydrate polymers, polyethylene oxide or polyethylene oxide-containing polymers and polyamines.
6. A product according to claim 5 wherein the hydrophilic polymer (A-1) is poly(vinyl alcohol), ethoxylated poly(vinyl alcohol), hydroxyalkyl cellulose or a copolymer of 2-hydroxyethyl acrylate, 2-hydroxyethyl methacrylate or an aminoalkyl methacrylate with N,N-dimethacrylamide or N-vinylpyrrolidone.
7. A product according to claim 6, wherein the hydrophilic polymer (A-1) is poly(vinyl alcohol), ethoxylated poly(vinyl alcohol) or hydroxethyl cellulose.
8. A product according to claim 4 wherein the hydrophilic polymer (A) is an essentially water soluble polymer (A-2) bearing a plurality of "chain-growth (free radical) reactive" functional groups.
9. A product according to claim 8, wherein the hydrophilic polymer (A-2) is poly-N-vinylpyrrolidone, poly-N,N-dimethylacrylamide, a copolymer of N,N-dimethylacrylamide with acrylic acid, methacrylic acid, sodium styrene sulfonate, 2-methacrylamido-2-methylpropane sulfonic acid or 2-hydroxyethyl methacrylate; a copolymer of 2-hydroxyethyl methacrylate or N-tert.-butylaminoethyl methacrylate in which at least 1 mol % of the mer units are reacted with an isocyanato or oxirane functional vinyl compound; poly(vinylalcohol), ethoxylated poly(vinyl alcohol) or hydroxyethyl cellulose in which 0 to 5 mol % of the OH groups are reacted with an isocyanato or oxirane functional vinyl compound; poly(ethylene oxide) of 1000-10000 MW, bis-(aminopropyl)-poly(ethylene oxide) or a block copolyurethane of poly(ethylene oxide) and polydimethylsiloxane dialkanol, with or without terminal methacrylate groups.
10. A product according to claim 9 wherein the hydrophilic polymer (A-2) is poly-N,N-dimethylacrylamide, a copolymer of N,N-dimethylacrylamide with acrylic acid, methacrylic acid, sodium styrene sulfonate, 2-methacrylamido-2-methyl-propane-sulfonic acid or 2-hydroxyethyl methacrylate; ethoxylated poly(vinyl alcohol) or hydroxyethyl cellulose with 1-4 mol % of OH groups reacted with 2-isocyanatoethyl methacrylate, m-isopropenyl-$\alpha,\alpha$-dimethylbenzyl isocyanate or glycidyl methacrylate; poly-(ethylene oxide) or bis-aminopropyl)polyethylene oxide of 900-8000 MW endcapped with2-isocyanatoethyl methacrylate, m-isopropenyl-$\alpha,\alpha$-dimethylbenzyl isocyanate or glycidyl methacrylate.
11. A product according to claim 1, wherein the essentially hydrophobic polymer (B) is either a step-growth polymer (B-1) which is a polyester, polyamide, polyimide, polyether, polyurethane, polyurea, epoxy resin, polythioether, silicone rubber or polyionene, or is a chain-growth vinyl polymer (B-2).
12. A product according to claim 11 wherein the hydrophobic polymer is a polymer (B-1) which is a polyester, polyamide, polyimide, polyether, polyurethane, polyurea, epoxy resin, polythioether, silicone rubber or polyionene.
13. A product according to claim 12 wherein the hydrophobic polymer (B-1) is a polyurethane or polyurea.
14. A product according to claim 13 wherein the hydrophobic polymer (B-1) is a polyurethane.
15. A product according to claim 14 wherein the polyurethane contains polydimethylsiloxane chains of

500-10000 MW or is a fluorine containing polyurethane.

16. A product according to claim 12 wherein the hydrophobic polymer (B-1) is a silicone rubber.

17. A product according to claim 11 wherein the hydrophobic polymer is a polymer (B-2) which is a chain-growth vinyl polymer.

18. A product according to claim 17 wherein the hydrophobic polymer (B-2) is a linear or crosslinked vinyl polymer having recurring structural units of the formula I:

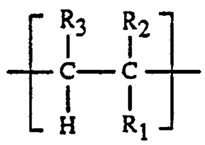

I

wherein $R_1$ is hydrogen or methyl, $R_2$ is an ester, amide, carboxy, ether, lactam or aromatic group, and $R_3$ is hydrogen or has the same meaning as $R_2$.

19. A product according to claim 18 wherein the hydrophobic polymer (B-2) is a linear or crosslinked homopolymer or copolymer of a monomer or monomers selected from the group consisting of mono- or polyfunctional acrylates, methacrylates, acrylamides, methacrylamides, fumarates, maleates, itaconates, vinyl ethers, vinyl esters, vinyl lactams or styrenes.

20. A product according to claim 19 wherein the hydrophobic polymer (B-2) contains 30-100 mol % of mer-units of a linear or branched alkyl acrylate or methacrylate with 1 to 18 carbon atoms in the alkyl group; a cycloalkyl acrylate or methacrylate with 6 to 12 carbon atoms in the cycloalkyl group; phenyl- and benzyl acrylate or methacrylate; styrene; a fluorine containing acrylate, methacrylate or styrenic monomer with 3 to 21 fluorine atoms; a Si atoms containing acrylate, methacrylate or styrenic monomer with 2 to 10 Si atoms.

21. A product according to claim 17, wherein the hydrophobic polymer (B-2) is the polymerization product of 20-100 % (by weight) of a heat- or radiation curable poly-vinyl substituted polyester, polyurethane, polyurea or polyether of 500-10,000 MW with 0-80 % (by weight) vinyl monomers.

22. A product according to claim 21, wherein the hydrophobic polymer (B-2) is the polymerization product of 50-100 % (by weight) of a divinyl substituted polyethylene-, polypropylene- or polytetramethylene oxide of 500-10,000 MW, and 0-50 % (by weight) of vinyl monomers.

23. A product according to claim 17, wherein the hydrophobic polymer (B-2) is the polymerization product of a di-, tri- or tetravinyl substituted poly-dimethylsiloxane or poly-dimethylsiloxane-polyurethane of 500-10,000 MW.

24. A product according to claim 23, wherein the hydrophobic polymer (B-2) is the copolymerization product of 20-80 % (by weight) of a di-, tri- or tetravinyl substituted polydimethyl siloxane or polyurethane with 80-20 % (by weight) vinyl monomers.

25. A product according to claim 17, wherein the hydrophobic polymer (B-2) is the polymerization product of a divinyl derivative of a fluorinated polyether diol or a perfluoroalkyl substituted diol.

26. A product according to any of the preceding claims which is a contact lens.

27. A product according to any of claims 6, 7, 9, 10, 15, 16, 20 or 22-25, which is a contact lens.

28. A process for making a product having a preformed, optically true, thin, conforming, continuous, integral, wettable hydrophilic polymeric surface on an essentially hydrophobic polymer form, said surface being intimately bonded and copolymerized through a multiplicity of covalent bonds distributed essentially uniformly across the entire polymeric surface/polymer substrate interface, which comprises

(a) coating a mold with a film-forming first hydrophilic polymer (A), said polymer containing sites capable of undergoing subsequent copolymerization with a monomer or monomer mixture required to form a hydrophobic polymer (B),

(b) polymerizing the monomer or monomer mixture required to form the hydrophobic polymer (B) in contact with the coated mold whereby effecting copolymerization with the reactive sites present in the mold coating to achieve intimate bonding therewith by way of a multiplicity of covalent bonds, and

(c) releasing the product from the mold.

29. A process according to claim 28 wherein the hydrophilic polymer (A) is either a polymer (A-1) which contains a plurality of "step-growth reactive" functional groups and is selected from the group consisting of water soluble vinyl polymers, carbohydrate polymers, polyethylene oxide or polyethylene oxide-containing polymers, and polyamines, or is an essentially water soluble polymer (A-2) bearing a plurality of "chain-growth (free radical) reactive" functional groups and the essentially hydrophobic polymer (B) is either a

step-growth polymer (B-1) which is a polyester, polyamide, polyimide, polyether, polyurethane, polyurea, epoxy resin, polythioether, silicone rubber or polyionene, or is a chain-growth vinyl polymer (B-2).

30. A contact lens prepared by the process according to claim 28.

31. A contact lens prepared by the process according to claim 29.

32. A product which comprises

a) a preformed, thin, conforming, continuous, integral polymeric surface of a hydrophobic and/or lipophobic polymer (C) intimately bonded through a multiplicity of covalent bonds distributed essentially uniformly across the entire polymeric surface/polymer substrate interface on

b) a polymer substrate which is reaction cast and is a more hydrophilic and/or liphophilic polymer (D).

33. A product according to claim 32 wherein the polymeric surface of hydrophobic and/or lipophobic polymer (C) is 0.1 to 500 microns in thickness.

34. A product according to claim 32, wherein the hydrophobic and/or lipophobic polymer (C) is selected from the group consisting of water insoluble vinyl polymers, polydienes, polyesters, polyethers, polyamides, polyurethanes, or polyureas and contain either a plurality of "step-growth-reactive" functional groups (C-1) or a plurality of "chain-growth-reactive" functional groups (C-2).

35. A product according to claim 32 wherein the more hydrophilic and/or lipophilic polymer (D) is either a step-growth polymer (D-1), which is a polyester, polyamide, polyimide, polyurethane, polyurea, epoxy resin or polyionene, or is a chain-growth vinyl polymer (D-2).

36. A process for making a product having a preformed, thin, conforming, continuous, integral hydrophobic and/or lipophobic polymeric surface on a more hydrophilic and/or lipophilic polymer form, said surface being intimately bonded and copolymerized through a multiplicity of covalent bonds distributed essentially uniformly across the entire polymeric surface/polymer substrate interface, which comprises

a) coating a mold with a film-forming first hydrophobic and/or lipophobic polymer (C) said polymer containing sites capable of undergoing subsequent copolymerization with a monomer or monomer mixture required to form a more hydrophilic and/or lipophilic polymer (D),

b) polymerizing the monomer or monomer mixture required to form the more hydrophilic and/or lipophilic polymer (D) in contact with the coated mold whereby effecting copolymerization with the reactive sites present in the mold coating to achieve intimate bonding therewith by way of a multiplicity of covalent bonds, and

c) releasing the product from the mold.

37. A process according to claim 36 wherein the hydrophobic and/or lipophobic polymer (C) is selected from the group consisting of water insoluble vinyl polymers, polydienes, polyesters, polyethers, polyamides, polyurethanes or polyureas containing either a plurality of "step-growth-reactive" functional groups (C-1) or a plurality of "chain-growth (free radical) reactive" functional groups, (C-2), and the more hydrophilic and/or lipophilic polymer (D) is either a step-growth polymer (D-1), which is a polyester, polyamide, polyimide, polyurethane, polyurea, epoxy resin, or polyionene, or is a chain-growth vinyl polymer (D-2).

38. A product according to claim 34, wherein the hydrophobic and/or lipophobic polymer (C) contains at least 20 % by weight fluorine.